# EUROPÄISCHE PATENTSCHRIFT

(11) **EP 2 678 376 B1**
(45) Veröffentlichungstag und Bekanntmachung des Hinweises auf die Patenterteilung: **01.04.2015**
(21) Anmeldenummer: 12702241.6
(22) Anmeldetag: 01.02.2012
(51) Int. Cl.: C08G 77/388

(54) **NEUARTIGE POLYSILOXANE MIT BETAINGRUPPEN, DEREN HERSTELLUNG UND VERWENDUNG**
NOVEL POLYSILOXANES HAVING BETAINE GROUPS, PRODUCTION AND USE THEREOF
NOUVEAUX POLYSILOXANES COMPRENANT DES GROUPES BÉTAÏNE, LEUR PRODUCTION ET UTILISATION

(30) Priorität: 23.02.2011 DE 102011004554; 17.08.2011 DE 102011110921
(43) Veröffentlichungstag der Anmeldung: 01.01.2014
(73) Patentinhaber: Evonik Degussa GmbH, 45128 Essen (DE)
(72) Erfinder: HARTUNG, Christian, 45133 Essen (DE); HERRWERTH, Sascha, 45134 Essen (DE); FERENZ, Michael, 45147 Essen (DE); WINTER, Patrick, 45473 Mülheim an der Ruhr (DE); FLINTROP, Nicole, 45277 Essen (DE)
(86) Internationale Anmeldenummer: PCT/EP2012/051624
(87) Internationale Veröffentlichungsnummer: WO 2012/113620

(56) Entgegenhaltungen:
- EP-A1- 0 166 122

## Beschreibung

### Gebiet der Erfindung

Gegenstand der Erfindung sind neuartige Polysiloxane, die mindestens eine Betaingruppe enthalten, sowie ein Verfahren zu deren Herstellung. Sie betrifft ferner die Verwendung dieser Polymere als Pflegewirkstoff in Formulierungen, insbesondere für die Pflege und Reinigung von Haut und Hautanhangsgebilden, wie beispielsweise als Konditioniermittel für Haare, sowie die Verwendung als beispielsweise Textilweichmacher. Ferner betrifft die Erfindung die diese neuartigen Verbindungen enthaltenden Formulierungen.

### Stand der Technik

Menschliches Haar ist täglich den verschiedensten Einflüssen ausgesetzt. Neben mechanischen Beanspruchungen durch Bürsten, Kämmen, Hochstecken oder Zurückbinden werden die Haare auch durch Umwelteinflüsse wie zum Beispiel starke UV-Strahlung, Kälte, Hitze, Wind und Wasser angegriffen. Auch der physiologische Status (z.B. Alter, Gesundheit) der jeweiligen Person beeinflusst den Zustand der keratinischen Fasern.

Insbesondere die Behandlung mit chemischen Mitteln verändert Struktur und Oberflächeneigenschaften der Haare. Methoden wie zum Beispiel das Dauerwellen, Bleichen, Färben, Tönen und Glätten, aber auch häufiges Waschen mit aggressiven Tensiden tragen dazu bei, dass mehr oder weniger starke Schäden an der Haarstruktur verursacht werden. So wird zum Beispiel bei einer Dauerwelle sowohl der Cortex als auch die Cuticula des Haares angegriffen. Die Disulfid-Brücken des Cystins werden durch den Reduktionsschritt aufgebrochen und im anschließenden Oxidationsschritt zum Teil zu Cysteinsäure oxidiert.

Der Bedarf an vielseitig einsetzbaren Wirkstoffen für reinigende und gleichzeitig pflegende Formulierungen für Haare wie z.B. Shampoos, *Leave-In Conditioner,* Haarspülungen und Haarnachbehandlungsmittel ist daher sehr groß.

Sehr ähnliche Überlegungen wie für die Behandlung von Haaren gelten ebenfalls für die Pflege und das Ausrüstung von Textilen. Auch hier sind Mittel zum Schutz und zur Pflege der Fasern nötig.

Organomodifizierte Siloxane werden in den verschiedensten Applikationen eingesetzt. Eine Vielzahl von unterschiedlichen Siloxan-Derivaten findet auch Anwendung in kosmetischen und reinigenden Formulierungen für die Pflege und Reinigung von Haut und Haaren. Die Eigenschaften von organomodifizierten Siloxanen lassen sich dabei unter anderem durch die Art der Modifikation, sowie durch die Modifikationsdichte gezielt einstellen.

Mit Allylpolyethern können organophile oder nichtionische hydrophile Gruppen an ein Siloxangerüst gebunden werden. Als Pflegewirkstoff für Haare und Haut sind in dem Artikel "Les Copolymeres Polysiloxanes polyethers comme additifs dans les formulations cosmetiques" (Dr. Kollmeier; Parfums, Cosmetiques, Aromes; 51; 1983; 67-72) beispielsweise Siloxane beschrieben, die Polyethergruppen mittel- und/oder endständig tragen. WO 2002053111 beschreibt die Verwendung von Siliconpolyether-Blockcopolymeren mit (AB)n Strukturen in wässrigen, tensidischen Körperreinigungsmitteln, die gute kosmetische Eigenschaften speziell für das Volumen, die Kämmbarkeit und den Glanz von Haaren aufweisen.

Auch kommerzielle Produkte auf Polyethersiloxan-Basis wie z.B. PEG-12 Dimethicone (nach INCI-Nomenklatur; z.B. DC 5324 der Firma Dow Corning) werden für die Haarpflege eingesetzt. Diese Polyethersiloxane weisen im Allgemeinen gute konditionierende Eigenschaften in Haarpflegeformulierungen auf, jedoch verbunden mit einer sehr stark ausgeprägten Viskositätserniedrigung in den Formulierungen.

US 5879671 beschreibt die Verwendung von wässrigen, tensidischen Körperreinigungsmitteln, die Mischungen von aminofunktionellen Siloxanen und Polyethersiloxanen nach dem Stand der Technik als Pflegewirkstoff enthalten. Diese Mischungen bewirken eine dauerhafte Verbesserung der Trocken- und Nasskämmbarkeit des Haares. Aminofunktionelle Siloxane, wie z.B. die unter den INCI-Namen Amodimethicone (z.B. SF 1708 der Firma Momentive) oder Aminopropyl Dimethicone (z.B. KF-8015 der Firma Shin-Etsu) erhältlichen Produkte, zeigen sehr gute konditionierende Eigenschaften auf Haut und Haaren und aufgrund der im sauren pH-Bereich vorliegenden protonierten und somit kationischen Aminfunktionen, d.h. Ammoniumverbindungen, eine gute Substantivität. Jedoch weisen diese aminofunktionellen Siloxane ebenfalls stark viskositätsreduzierende Eigenschaften in den Formulierungen auf.

Polysiloxane mit quaternären Ammoniumgruppen, sogenannten Quatgruppen, und deren Anwendung als Additive für Haarpflege oder auch als Textilweichmacher sind ebenfalls aus der Patentliteratur bekannt. So werden zum Beispiel in DE 1493384, EP 0017122 und US 4895964 Strukturen beschrieben, bei denen Siloxane mittelständig mit statistisch über das Polymer verteilten quaternären Ammoniumgruppen modifiziert sind. Diese Verbindungen haben den Nachteil, dass sie keinen ausgeprägten Siliconcharakter besitzen und nur eine durchschnittlich gute Wirksamkeit als Konditioniermittel für z.B. Haare oder Textilien zu beobachten ist.

Einen ausgeprägteren Siliconcharakter haben kationische Polysiloxane, wie sie in DE 3719086 und EP 294642 beschrieben werden. Diese Schriften beschreiben Strukturen, bei denen die quaternären Ammoniumfunktionen endständig an das Polysiloxan gebunden sind. Derartige Verbindungen bieten Vorteile hinsichtlich ihrer Wirkung als Konditioniermittel sowohl für Haare und Textilien als auch für harte Oberflächen. Die Verwendung solcher Verbindungen in kosmetischen Formulierungen ist z.B. in EP 530974, EP 617607, EP 1080714, WO 201082879 und US 6207141 beschrieben worden. Kommerziell sind diese Strukturen z.B. unter dem INCI-Namen Quaternium-80 (z.B. ABIL^{®} Quat 3272 der Firma Evonik Goldschmidt GmbH) erhältlich. Allerdings besitzen diese Strukturen nur zwei Quat-Gruppen. Aufgrund der verhältnismäßig geringen Substantivität ist die Affinität der Polysiloxane zu bestimmten Oberflächen somit nur mittelmäßig groß. Zudem besitzen diese α,ω-modifizierten Strukturen ähnlich den entsprechenden Polyether- oder Amino-modifizierten Siloxanen den Nachteil, dass sie in typischen Tensidformulierungen aufgrund des hohen Siliconcharakters die Viskosität stark erniedrigen.

In der EP 1887024 werden endständig kationische Polysiloxane mit einer T-Siloxan-Struktur und deren Verwendung als Konditioniermittel in kosmetischen Formulierungen beschrieben. Diese kationischen Polysiloxane zeigen einen ausgeprägten konditionierenden und glanzerzeugenden Effekt. Kommerziell ist dieses Produkt unter dem INCI-Namen Silicone Quaternium-22 (ABIL^{®} T Quat 60 der Firma Evonik Goldschmidt GmbH) erhältlich. Auch diese Siliconquats weisen jedoch viskositätserniedrigende Eigenschaften in Tensidformulierungen auf.

In EP 164668 und EP 166122 werden Betaingruppen enthaltende Siloxane und deren Verwendung in kosmetischen Zubereitungen, vor allem in Haarpflegemitteln, beansprucht. Ein kommerzielles Produkt ist beispielsweise unter dem INCI-Namen Dimethicone Propyl PG-Betaine (z.B. ABIL^{®} B 9950 der Firma Evonik Goldschmidt GmbH) erhältlich. Jedoch sich auch bei diesen Strukturen folgende Nachteile festzustellen:
1.) α,ω-modifizierte Siliconbetaine weisen eine verhältnismäßig geringe Substantivität bzw. Konditionierwirkung sowie relativ stark verdünnende Effekte in Formulierungen auf, und
2.) kammständig modifizierte Produkte haben ebenfalls eine nur mäßige Konditionierwirkung.

Es besteht daher also weiterhin ein Bedarf an vielseitig einsetzbaren Wirkstoffen mit sehr hoher Konditionierwirkung und Substantivität in reinigenden und pflegenden Formulierungen. Dabei ist es zudem äußerst wünschenswert, dass die Viskosität von insbesondere tensidischen Formulierungen durch den Wirkstoff nicht oder kaum beeinflusst wird, so dass die Zugabe von Verdickern minimiert werden kann.

Aufgabe der Erfindung war es, einen Wirkstoff zur Verfügung zu stellen, der in der Lage ist, eine sehr gute Konditionierung zu bewirken und eine nur geringe Wirkung auf die Viskosität unterschiedlichster Formulierungen ausübt.

### Beschreibung der Erfindung

Überraschenderweise wurde gefunden, dass die im Folgenden beschriebenen Siliconbetaine sowie Verfahren zu deren Herstellung die der Erfindung gestellte Aufgabe zu lösen vermögen. Dies ist für den Fachmann insbesondere daher überraschend, da die erfindungsgemäßen Strukturen einen langen, unsubstituierten Siliconmittelblock aufweisen, und die erfindungsgemäßen Siliconbetaine in Formulierungen anders als hierdurch erwartet eine kaum viskositätsverändernde Wirkung zeigen.

Gegenstand der vorliegenden Erfindung sind daher ein Verfahren zur Herstellung von Polysiloxanen enthaltend mindestens eine Betaingruppe wie in Anspruch 1 beschrieben, die hierdurch erhältlichen, betaingruppen-enthaltenden Siloxane selber sowie deren Verwendung und Formulierungen enthaltend die erfindungsgemäßen betaingruppen-enthaltenden Siloxane.

Besonders vorteilhaft an erfindungsgemäßen Betainpolysiloxanen sind deren nicht viskositätsreduzierenden Eigenschaften in Ethersulfat und Betain enthaltenden tensidischen Formulierungen, die maßgeblich in der kosmetischen Industrie Verwendung finden. Das führt zu einer signifikanten Reduktion an benötigten Verdickern, um die Formulierungen auf die gewünschte Viskosität einzustellen. Dadurch wird eine Vereinfachung der Formulierung ermöglicht, die dem Ressourcenschonenden Aspekt Rechnung trägt.
Ein Vorteil der erfindungsgemäßen Betainpolysiloxane ist deren generell gute Verträglichkeit mit anionischen Komponenten, insbesondere mit anionischen Tensiden. Ein Vorteil der erfindungsgemäßen Betainpolysiloxane ist deren hohe Substantivität. Ein weiterer Vorteil der erfindungsgemäßen Polysiloxane mit Betaingruppen ist, dass diese hervorragende konditionierende Effekte auf Haut, Haar und Textilien ausüben. Ein weiterer Vorteil der erfindungsgemäßen Verbindungen ist, dass sie die Eigenschaften wie Kämmbarkeit, Weichheit, Volumen, Formbarkeit, Glanz, Handhabbarkeit und die Entwirrbarkeit von ungeschädigten und geschädigten Haaren verbessern.
Ein weiterer Vorteil der erfindungsgemäßen Produkte ist, dass diese Polysiloxane zu einem verbesserten Anschäumverhalten, einem erhöhten Schaumvolumen und/oder einer besseren Schaumcremigkeit der Formulierungen beitragen.

Die erfindungsgemäßen Polysiloxane werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden im Rahmen der vorliegenden Erfindung Verbindungen, wie z.B. organomodifizierte Polysiloxane oder Polyether, beschrieben, die verschiedene Einheiten mehrfach aufweisen können, so können diese statistisch verteilt (statistisches Oligomer) oder geordnet (Blockoligomer) in diesen Verbindungen vorkommen. Angaben zu Anzahl von Einheiten in solchen Verbindungen sind als Mittelwert, gemittelt über alle entsprechenden Verbindungen zu verstehen.
Alle angegebenen Prozent (%) sind, wenn nicht anders angegeben, Massenprozent. Alle Bedingungen wie beispielsweise Druck und Temperatur sind, wenn nicht anders angegeben, Standardbedingungen.

Gegenstand der vorliegenden Erfindung ist ein Verfahren zur Herstellung von mindestens eine Betaingruppe enthaltenden Polysiloxanen umfassend die Verfahrensschritte:
A) Anlagerung von Organopolysiloxanen der allgemeinen Formel I 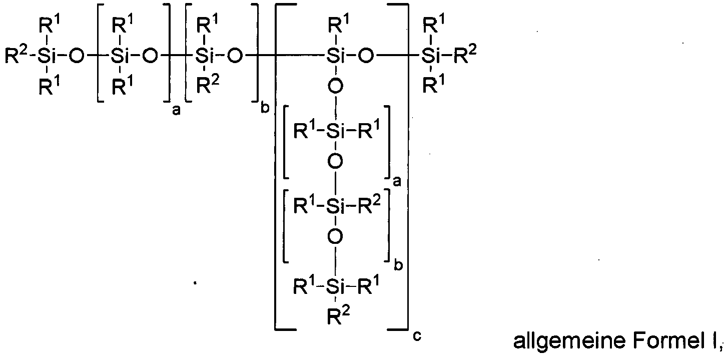 worin
   - R¹: unabhängig voneinander gleiche oder verschiedene, verzweigte oder unverzweigte, aliphatische oder aromatische Kohlenwasserstoffreste mit 1 bis 20 C-Atomen, bevorzugt unverzweigte, aliphatische oder aromatische Kohlenwasserstoffreste mit 1 bis 9 C-Atomen und besonders bevorzugt Methyl, Ethyl oder Phenyl,
   - R²: unabhängig voneinander gleich oder verschiedene Reste R¹ oder H, mit der Maßgabe, dass mindestens drei Reste R² gleich H sind,
   - a: 5 bis 500, bevorzugt 10 bis 250, insbesondere 15 bis 75,
   - b: 1 bis 50, bevorzugt 1 bis 20, insbesondere 3 bis 15,
   - c: 0 bis 10, bevorzugt 0 bis 5, insbesondere 0,
   bedeuten,
   an Vinylsiloxane der allgemeinen Formel II, 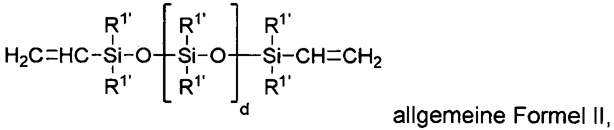 mit
   - R^{1'}: unabhängig voneinander gleiche oder verschiedene, verzweigte oder unverzweigte, aliphatische oder aromatische Kohlenwasserstoffreste mit 1 bis 20 C-Atomen, bevorzugt unverzweigte, aliphatische oder aromatische Kohlenwasserstoffreste mit 1 bis 9 C-Atomen und besonders bevorzugt Methyl, Ethyl oder Phenyl,
   - d: 10 bis 1.000, bevorzugt 101 bis 750, insbesondere 201 bis 500,
   in Gegenwart von Platin- oder Rhodiumkatalysatoren,
   mit der Maßgabe, dass die Organopolysiloxane der allgemeinen Formel I in mindestens 6-fachem und höchstens 40-fachem molaren Überschuss bezogen auf das Vinylsiloxan der allgemeinen Formel II vorliegen,
   unter Erhalt eines SiH-Gruppen aufweisenden Reaktionsproduktes und weiterer Umsetzung des Reaktionsproduktes durch Verfahrensschritt B);
B) Übergangsmetall-katalysierte, teilweise oder vollständige Addition der SiH-Gruppen der Produkte aus Verfahrensschritt A) an mindestens eine, mindestens eine Epoxygruppe aufweisende Verbindung ausgewählt aus Alkenyl- und Alkinylverbindungen, insbesondere Alkenylverbindungen, ausgewählt aus der Gruppe bestehend aus 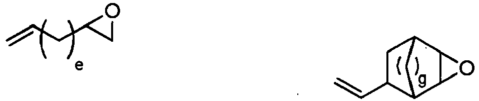 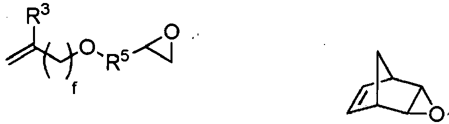 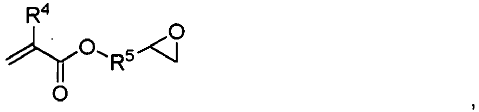 mit
   - R³: Wasserstoff oder Alkyl mit 1 bis 6 C-Atomen, bevorzugt Wasserstoff,
   - R⁴: Wasserstoff oder Alkyl mit 1 bis 6 C-Atomen, bevorzugt Methyl,
   - R⁵: unabhängig voneinander gleiche oder verschiedene zweiwertige Kohlenwasserstoffreste, die gegebenenfalls Etherfunktionen enthalten, bevorzugt Methylen,
   - e: 0 bis 30, bevorzugt 0 bis 12, insbesondere 0 bis 6,
   - f: 0 bis 18, bevorzugt 0 bis 6, insbesondere 1,
   - g: 0 bis 2, bevorzugt 0 bis 1, insbesondere 0,
   insbesondere eine Addition an Allylglycidylether;
C) gegebenenfalls zusätzliche, übergangsmetall-katalysierte, teilweise oder vollständige Addition der verbleibenden SiH-Gruppen der Produkte aus Verfahrensschritt A) an mindestens eine Verbindung ausgewählt aus Alkenyl- und Alkinylverbindungen, wie beispielsweise α-Olefine oder Doppelbindungen enthaltende Polyether, insbesondere ausgewählt aus der Gruppe bestehend aus 1-Dodecen, 1-Hexadecen, 1-Octadecen und Allylpolyether der allgemeinen Formel III 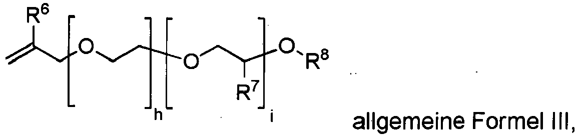 mit
   - R⁶: Wasserstoff oder Alkyl mit 1 bis 6 C-Atomen, bevorzugt Wasserstoff oder Methyl, insbesondere Wasserstoff,
   - R⁷: unabhängig voneinander gleiche oder verschiedene Alkyl-, Aryl- oder Alkarylreste mit 1 bis 30 C-Atomen, die gegebenenfalls Etherfunktionen enthalten, bevorzugt Methyl, Ethyl oder Phenyl, insbesondere Methyl,
   - R⁸: Alkylrest mit 1 bis 18 C-Atomen, ein Acetatrest oder Wasserstoff, bevorzugt Alkylrest mit 1 bis 18 C-Atomen, ein Acetatrest und insbesondere Methyl,
   - h: 0 bis 100, bevorzugt 1 bis 50, insbesondere 1 bis 30,
   - i: 0 bis 100, bevorzugt 1 bis 50, insbesondere 1 bis 30;
D) teilweise oder vollständige Umsetzung der nach den Verfahrensschritten A), B) und gegebenenfalls C) erhaltenen Epoxysiloxane in Verfahrensschritt d1) und/oder d2):
   d1) mit mindestens einem Aminosäure-Derivat der allgemeinen Formel IV 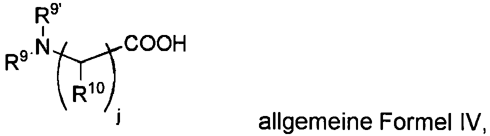 mit
      - R⁹: Alkylrest mit 1 bis 6 C-Atomen, bevorzugt Methyl,
      - R^{9'}: Alkylrest mit 1 bis 6 C-Atomen, bevorzugt Methyl,
      - R¹⁰: unabhängig voneinander gleiche oder verschiedene, verzweigte oder unverzweigte, aliphatische oder aromatische Kohlenwasserstoffreste mit 1 bis 20 C-Atomen, die gegebenenfalls Ether-, Thiol-, Thioether- oder Hydroxyfunktionen enthalten, oder Wasserstoff, bevorzugt Wasserstoff,
      - j: 1 bis 10, bevorzugt 1 bis 3, insbesondere 1,
      zu Betaingruppen-modifizierten Siloxanen;
   d2) mit mindestens einer sekundären oder tertiären Amino-Verbindung ausgewählt aus der Gruppe der allgemeinen Formeln V, VI und VII, 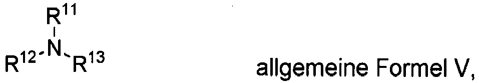 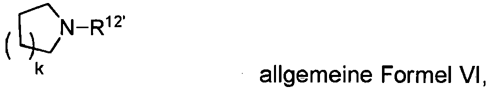 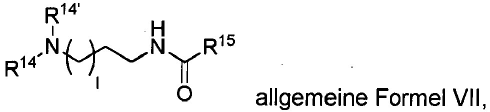 mit
      - R¹¹: Alkylreste mit 1 bis 6 C-Atomen, bevorzugt Methyl,
      - R¹²: Wasserstoff oder Alkyl mit 1 bis 6 C-Atomen, bevorzugt Wasserstoff oder Methyl,
      - R¹³: Alkyl-, Aryl- oder Alkarylrest mit 1 bis 30 C-Atomen der gegebenenfalls Etherfunktionen enthält,
      - R^{12'}: Wasserstoff oder Alkyl mit 1 bis 6 C-Atomen, bevorzugt Wasserstoff oder Methyl,
      - k: 0 bis 4, bevorzugt 1 bis 2, insbesondere 1,
      - R¹⁴: Ethyl oder Methyl, bevorzugt Methyl,
      - R^{14'}: Ethyl oder Methyl, bevorzugt Methyl,
      - R¹⁵: gegebenenfalls verzweigter, gesättigter oder ungesättigter Alkylrest mit 1 bis 30 C-Atomen, der gegebenenfalls Ether- oder Hydroxylfunktionen enthält, bevorzugt linearer gesättigter Alkylrest mit 8 bis 22 C-Atomen,
      - I: 0 bis 4, bevorzugt 1,
      mit der Maßgabe, dass im Falle von Formel VII oder im Falle von tertiären Aminen der allgemeinen Formeln V oder VI (d.h. R¹² bzw. R^{12'} ≠ H) equimolar bezüglich dieses tertiären Amins eine Säure H⁺X⁻ zugesetzt wird,
      mit
      - X⁻: gleiche oder verschiedene Gegenionen zu den positiven Ladungen an den gebildeten quaternären Ammoniumgruppen, ausgewählt aus anorganischen oder organischen Anionen der Säuren HX, bevorzugt Acetat, Lactat, Ethylsulfat, Methylsulfat, Toluolsulfonat, Bromid oder Chlorid,
      zu tertiären Amino- bzw. quaternären Ammoniumgruppenmodifizierten Siloxanen, und;
E) gegebenenfalls im Falle des Einsatzes von sekundären Aminen in Verfahrensschritt d2), d.h. R¹² bzw. R^{12'}= H,
   Umsetzung der entstandenen tertiären Aminogruppen mit

   [Y(CH₂)ₘCOO]_{1/n}Z allgemeine Formel VIII,

   mit
   - Y⁻: Ethylsulfat, Methylsulfat, Toluolsulfonat, Bromid oder Chlorid,
   - Zⁿ⁺: Alkali- oder Erdalkalikationen, bevorzugt Na⁺ oder K⁺ und
   - m: 1 bis 6, bevorzugt 1 oder 2, insbesondere 1,
   zu Betaingruppen.

Durch die Maßgabe, dass das SiH-Gruppen tragende Organopolysiloxan der allgemeinen Formel I im mindestens 6-fachen molaren Überschuss, bezogen auf das Doppelbindungen enthaltende Siloxan der allgemeinen Formel II, vorliegt, wird verhindert, dass es zur Ausbildung eines Netzwerkes und zur Entstehung hochviskoser Produkte kommt. Es werden somit keine Elastomere oder Gele gebildet. In der Regel besitzen die nach dem Verfahren hergestellten Organosiloxane Viskositäten bis 100.000 mPas. Ein gewisser Anteil des Organosiloxans kann in Form eines kammartig modifizierten Siloxans im Produkt vorliegen.
Wie aus der oben gewählten Formulierung ersichtlich können gegebenenfalls Verfahrensschritte ausgelassen werden. Lediglich Verfahrensschritte A), B) und d1) oder die Kombination A), B), d2) und E) sind zur Bildung der Betaingruppen-Modifizierung notwendig. Um ein Produkt mit statistisch mindestens einer Betaingruppe zu erhalten, wird dabei ein Molverhältnis von Aminosäurederivat der Formel IV zu Siloxan der Formel I von mindestens 1:1 eingesetzt. Alternativ kann auch ein Molverhältnis von sekundärem Amin der Formeln V/VI zu Säurederivat der Formel VIII zu Siloxan der Formel I von mindestens 1:1:1 eingehalten werden.
Aufgrund der gewählten Reaktionsbedingungen bildet sich aus dem Doppelbindungenenthaltenden Siloxan und dem SiH-funktionellen Siloxan in Verfahrensschritt A) beispielsweise ein Siloxan der in Formel IX dargestellten idealisierten "H-Struktur" (c = 0, R¹ = R^{1'} = Me, R² = Me oder H): 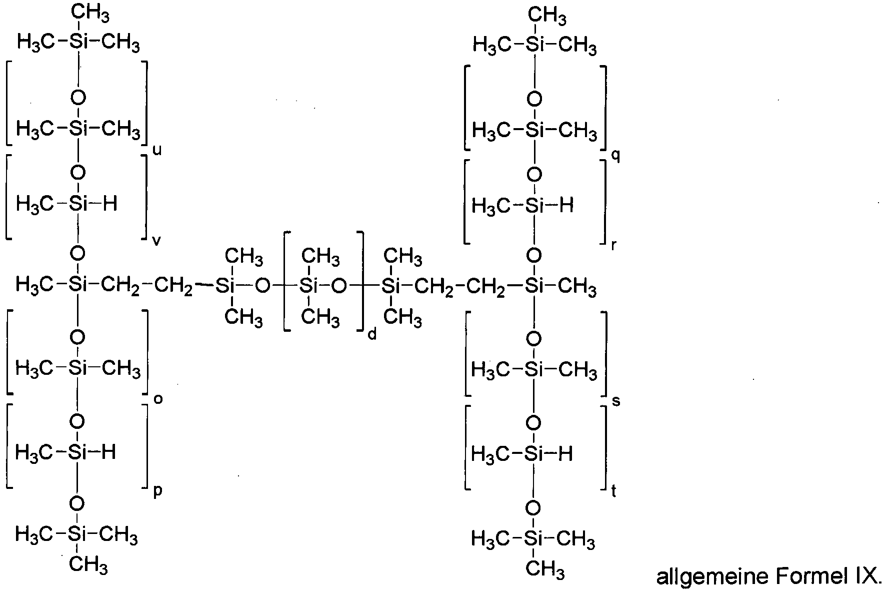 mit
u+o=q+s=a und
v+p=r+t=b-1.

Dem Fachmann ist geläufig, dass die oben angegebene allgemeine Formel IX eine idealisierte Strukturformel darstellt. Im Produkt können zusätzlich höher verzweigte/verbrückte Strukturen vorliegen.
Dieses Siloxangerüst bleibt bei den anschließenden Verfahrensschritten erhalten.

Die Darstellung der Siloxanpolymere kann mit Lösemittel oder lösemittelfrei erfolgen. Die gegebenenfalls aufkommende Schaumbildung kann durch den Einsatz von Lösemitteln unterdrückt werden. Geeignete Lösemittel sind zum Beispiel Toluol, Cyclohexan und Isopropanol.

Als wirksame Katalysatoren für die Verfahrensschritte A), B) und/oder gegebenenfalls C), d.h. der Hydrosilylierung von Siloxanen mit SiH-Gruppen an CC-Mehrfachbindungen, können Edelmetallkatalysatoren wie Pt- und Rh-haltige Komplexe eingesetzt werden, die dem Fachmann als hydrosilylierungsaktive Katalysatoren bekannt sind, zum Beispiel: H₂PtCl₆, (NH₃)₂PtCl₂, Pt[(CH₂=CH-SiMe₂)₂O]ₙ oder Rh(CO)(C₅H₇O₂). Geeignete und bevorzugte Bedingungen für die Hydrosilylierungsreaktion sind insbesondere z.B. in EP 1520870 beschrieben; diese wird hiermit bezüglich dieser Bedingungen als Referenz eingeführt und gilt als Teil des Offenbarungsgehaltes der vorliegenden Erfindung.

Geeignete Alkenyl-/Alkinylverbindungen in Verfahrensschritt C) sind zum Beispiel Polyether mit Mehrfachbindungen, zum Beispiel allylfunktionelle Polyether, Olefine, Ethen, Ethin, Propen, 1-Buten, 1-Hexen, 1-Dodecen, 1-Hexadecen, Allylalkohol, 1-Hexenol, Styrol, Eugenol, Allylphenol, Undecylensäuremethylester. Besonders geeignet sind Polyether mit Doppelbindungen insbesondere allylfunktionelle Polyether.

Die Verfahrensschritte A), B) und/oder gegebenenfalls C können sequentiell oder auch gleichzeitig durchgeführt werden.

Die Umsetzung der Epoxysiloxane mit Aminosäurederivaten des Verfahrensschrittes d1) zu betaingruppen-modifizierten Siloxanen ist beispielsweise in EP 0166122 beschrieben; die Umsetzung mit Aminen zu tertiären Amin- oder quaternären ammoniumgruppen-tragenden Siloxanen der Verfahrensschritte d2) und E) ist beispielsweise in DE 37 19 086 und EP 0 294 642 dargestellt.

Die durch das erfindungsgemäße Verfahren erhältlichen Betaingruppen enthaltenden Polysiloxane sind ebenfalls Gegenstand der vorliegenden Erfindung.
Die erfindungsgemäßen Betainpolysiloxane enthalten mindestens eine, bevorzugt mindestens drei, besonders bevorzugt mindestens fünf Betaingruppen.
Bevorzugte erfindungsgemäße Betainpolysiloxane werden mit den oben als bevorzugt beschriebenen Verfahren erhalten.

Ein weiterer Gegenstand dieser Erfindung ist die Verwendung der erfindungsgemäßen Betainpolysiloxane oder nach dem erfindungsgemäßen Verfahren erhältliche Betainpolysiloxane zur Herstellung von kosmetischen, pharmazeutischen oder dermatologischen Formulierungen.
Es können erfindungsgemäß wasserlösliche oder wasserunlösliche Polysiloxane-auch für die im Folgenden genannten, erfindungsgemäßen Verwendungen-verwendet werden. Je nach zu erzeugender Formulierung (trübe oder klare Formulierungen) ist es dem Fachmann geläufig, ob wasserlösliche oder unlösliche Polysiloxane zur Herstellung der Formulierung eingesetzt werden sollten. Der Begriff "wasserunlöslich" im Sinne der vorliegenden Erfindung ist definiert als eine Löslichkeit von weniger als 0.01 Gewichtsprozent in wässriger Lösung bei 20 °C und 1 bar Druck. Der Begriff "wasserlöslich" im Sinne der vorliegenden Erfindung ist definiert als eine Löslichkeit von gleich oder mehr als 0.01 Gewichtsprozent in wässriger Lösung bei 20 °C und 1 bar Druck.

Ein weiterer Gegenstand dieser Erfindung ist die Verwendung der erfindungsgemäßen Betainpolysiloxane oder nach dem erfindungsgemäßen Verfahren erhältliche Betainpolysiloxane als Pflegewirkstoff in, bevorzugt tensidhaltigen wässrigen, Pflege- und Reinigungsformulierungen.
Unter dem Begriff "Pflegewirkstoff" wird hier eine Substanz verstanden, die den Zweck erfüllt, einen Gegenstand in seiner ursprünglichen Form zu erhalten, die Auswirkungen äußerer Einflüsse (z.B. Zeit, Licht, Temperatur, Druck, Verschmutzung, chemische Reaktion mit anderen, mit dem Gegenstand in Kontakt tretenden reaktiven Verbindungen) wie beispielsweise Altern, Verschmutzen, Materialermüdung, Ausbleichen, zu mindern oder zu vermeiden oder sogar gewünschte positive Eigenschaften des Gegenstandes zu verbessern. Für letzten Punkt sei etwa ein verbesserter Haarglanz oder eine größere Elastizität des betrachteten Gegenstandes genannt.

Eine bevorzugte Pflegeformulierung ist in diesem Zusammenhang eine glanzverbessernde Pflegeformulierung.
In diesem Zusammenhang sind die Pflege- und Reinigungsformulierungen nicht auf kosmetische, pharmazeutische oder dermatologische Formulierungen beschränkt, sondern können auch solche Formulierungen sein, wie man in Haushalt und Industrie einsetzt, etwa zur Pflege und Reinigung von Oberflächen nicht lebender Gegenstände wie beispielsweise Fliesen, Holz, Glas, Keramik, Linoleum, Kunststoff, lackierte Oberflächen, Leder, Stoffe, Fasern. Beispiele solcher Gegenstände sind Fensterscheiben und -bänke, Duschabtrennungen, Fußböden wie Teppiche, Fliesen, Laminate, Parkett, Korkfußböden, Marmor-, Stein- und Feinsteinzeugböden Haushaltskeramiken wie WCs, Waschbecken, Bidets, Duschtassen, Badewannen, Türklinken, Armaturen, Haushaltswerkzeuge wie Waschmaschinen, Trockner, Spülmaschinen, Spülen aus Keramik oder Edelstahl, Möbel wie Tische, Stühle, Regale, Ablageflächen, Fenster, Kochgeschirr, Geschirr und Besteck, Wäsche, insbesondere körpernahe Wäsche ("Unterwäsche"), Wasserfahr-, Fahr- und Flugzeuge wie Autos, Busse, Motor- und Segelboote Werkzeuge wie chirurgische Instrumente, Staubsauger, Maschinen, Rohrleitungen, Tanks und Geräte für Transport, Verarbeitung und Aufbewahrung in der Lebensmittelverarbeitung. Somit handelt es sich in diesem Zusammenhang um die Verwendung in Reinigungs- und Pflegemitteln für Haushalt, industrielle und institutionelle Gewerbe.
In diesem Zusammenhang handelt es sich bei der zu pflegenden und reinigenden Oberfläche bevorzgt um die einer Faser oder eines Textils, insbesondere um die Oberfläche von gewobenen Textilien, Wäsche, Polstern oder Teppichen.
Ein weiterer Gegenstand dieser Erfindung ist die Verwendung der erfindungsgemäßen Betainpolysiloxane oder nach dem erfindungsgemäßen Verfahren erhältliche Betainpolysiloxane als Konditioniermittel für Haarbehandlungsmittel und Haarnachbehandlungsmittel sowie als Mittel zur Verbesserung der Haarstruktur.

Ein weiterer Gegenstand der vorliegenden Erfindung sind kosmetische, pharmazeutische oder dermatologische Formulierungen, bevorzugt kosmetische Pflege- und Reinigungsformulierungen, insbesondere tensidhaltige wässrige Pflege- und Reinigungsformulierungen wie z.B. Shampoos, Flüssigseifen und Duschgele, enthaltend erfindungsgemäße Betainpolysiloxane oder nach dem erfindungsgemäßen Verfahren erhältliche Betainpolysiloxane.
Erfindungsgemäß bevorzugte kosmetische Pflegeformulierungen sind insbesondere Haarbehandlungsmittel und Haarnachbehandlungsmittel zum Ausspülen oder zum Verbleib im Haar, beispielsweise Shampoos mit oder ohne ausgeprägter Konditionierwirkung, 2in1-Shampoos, Spülungen, Haarkuren, Haarmasken, Frisierhilfen, Stylingmittel, Fönlotionen, Haarfestiger, Dauerwellmittel, Haarglättungsmittel und Mittel zum Färben der Haare enthaltend mindestens eines der erfindungsgemäßen Polysiloxane oder eines der nach dem erfindungsgemäßen Verfahren erhältlichen, bevorzugt erhaltenen, Polysiloxane.

Die erfindungsgemäßen Betainpolysiloxane oder die nach dem erfindungsgemäßen Verfahren erhältlichen Betainpolysiloxane werden vorteilhaft in einer Konzentration von 0,01 bis 20 Massenprozent, bevorzugt 0,1 bis 8 Massenprozent, besonders bevorzugt von 0,2 bis 4 Massenprozent in den erfindungsgemäßen Kompositionen eingesetzt.

Die kosmetischen Formulierungen enthaltend die erfindungsgemäßen Betainpolysiloxane oder die nach dem erfindungsgemäßen Verfahren erhältlichen Betainpolysiloxane können z.B. mindestens eine zusätzliche Komponenten enthalten, ausgewählt aus der Gruppe der Emollients, Emulgatoren und Tenside, Verdicker/Viskositätsregler/Stabilisatoren, UV-Lichtschutzfilter, Antioxidantien und Vitamine, Hydrotrope (oder Polyole), Fest- und Füllstoffe, Filmbildner, Perlglanzadditive, Deodorant- und Antitranspirantwirkstoffe, Insektrepellentien, Selbstbräuner, Konservierungsstoffe, Konditioniermittel, Parfüme, Farbstoffe, Biogene Wirkstoffe, Pflegeadditive, Überfettungsmittel und Lösungsmittel. Substanzen, die als beispielhafte Vertreter der einzelnen Gruppen eingesetzt werden können, sind dem Fachmann bekannt und können beispielsweise der deutschen Anmeldung DE 102008001788.4 entnommen werden. Diese Patentanmeldung wird hiermit als Referenz eingeführt und gilt somit als Teil der Offenbarung. Bezüglich weiterer fakultativer Komponenten sowie die eingesetzten Mengen dieser Komponenten wird ausdrücklich auf die dem Fachmann bekannten einschlägigen Handbücher, z. B. K. Schrader, "Grundlagen und Rezepturen der Kosmetika", 2. Auflage, Seite 329 bis 341, Hüthig Buch Verlag Heidelberg, verwiesen.
Die Mengen der jeweiligen Zusätze richten sich nach der beabsichtigten Verwendung.
Typische Rahmenrezepturen für die jeweiligen Anwendungen sind bekannter Stand der Technik und sind beispielsweise in den Broschüren der Hersteller der jeweiligen Grund- und Wirkstoffe enthalten. Diese bestehenden Formulierungen können in der Regel unverändert übernommen werden. Im Bedarfsfall können zur Anpassung und Optimierung die gewünschten Modifizierungen aber durch einfache Versuche komplikationslos vorgenommen werden.

Ein weiterer Gegenstand dieser Erfindung sind Reinigungs- und Pflegeformulierungen für Haushalt, industrielle und institutionelle Anwendungen wie beispielsweise Desinfektionsmittel, Desinfektionsreiniger, Schaumreiniger, Fußbodenreiniger, Teppichreiniger, Polsterreiniger, Fußbodenpflegeprodukte, Marmorreiniger, Parkettreiniger, Stein- und Keramikbodenreiniger, Wischpflegemittel, Edelstahlreiniger, Glasreiniger, Geschirrspülmittel, Kunststoffreiniger, Sanitärreiniger, Holzreiniger, Lederreiniger, Waschmittel, Wäschepflegemittel Desinfektionswaschmittel, Vollwaschmittel, Feinwaschmittel, Wollwaschmittel, Weichspülmittel, Imprägniermittel enthaltend mindestens eines der erfindungsgemäßen Polysiloxane oder eines der nach dem erfindungsgemäßen Verfahren erhältlichen, bevorzugt erhaltenen, Polysiloxane. In diesem Zusammenhang bevorzugte Reinigungs- und Pflegeformulierungen für Haushalt, industrielle und institutionelle Anwendungen sind Waschmittel, Wäschepflegemittel, Vollwaschmittel, Feinwaschmittel, Wollwaschmittel, Weichspülmittel, Imprägniermittel, insbesondere Weichspülmittel.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1: Herstellung eines Polysiloxans mit Betainmodifikation:

In einem mit Rührwerk, Rückflusskühler, Thermometer und Tropftrichter ausgerüsteten Vierhalskolben wurden 65,0 g (2,5 mmol) eines α,ω-Divinylsiloxans der allgemeinen Formel CH₂=CH-SiMe₂O-(SiMe₂O)₃₄₈-SiMe₂-CH=CH₂ und 74,2 g (650 mmol) Allylglycidylether (AGE) in 200 ml Toluol gelöst, auf 100 °C aufgeheizt und mit 4,3 mg (NH₃)₂PtCl₂ versetzt. 141,5 g (50,0 mmol bzw. 500,0 mmol SiH-Gruppen) eines SiH-funktionellen Siloxanes der allgemeinen Formel Me₃SiO-(SiMe₂O)₂₈(SiMeHO)₁₀SiMe₃ wurden unter Rühren zugetropft und das Reaktionsgemisch 2 h bei 100 °C bis zu einem SiH-Umsatz von >95% umgesetzt. Das Reaktionsprodukt wurde 2 h bei 120 °C und einem Vakuum von 1 mbar destilliert, um Toluol, überschüssiges AGE und andere flüchtige Nebenbestandteile abzutrennen.
Das leicht opake Epoxysiloxan-Produkt wurde daraufhin in 300 ml Isopropanol gelöst, mit 51,6 g (500 mmol) *N,N*-Dimethylglycin versetzt und für 6 h auf 80 °C erhitzt.
315,2 g Propylenglycol wurden zugeben und das Isopropanol im Vakuum bei 100 mbar und 80 °C abdestilliert. Es wurde ein leicht gelbes, leicht opakes Produkt erhalten, das 50% Propylenglycol enthält und im ¹H-NMR einen Epoxyumsatz von >98% zeigt.

### Beispiel 2: Herstellung eines Polysiloxans mit Betainmodifikation::

In einem mit Rührwerk, Rückflusskühler, Thermometer und Tropftrichter ausgerüsteten Vierhalskolben wurden 65,0 g (2,5 mmol) eines Divinylsiloxans der allgemeinen Formel CH₂=CH-SiMe₂O-(SiMe₂O)₃₄₈-SiMe₂-CH=CH₂ und 74,2 g (650 mmol) Allylglycidylether (AGE) in 250 ml Toluol gelöst, auf 100 °C aufgeheizt und mit 4,9 mg (NH₃)₂PtCl₂ versetzt. 178,6 g (50,0 mmol bzw. 500,0 mmol SiH) eines SiH-funktionellen Siloxanes der allgemeinen Formel Me₃SiO-(SiMe₂O)₃₈(SiMeHO)₁₀SiMe₃ wurden unter Rühren zugetropft und das Reaktionsgemisch 3 h bei 110 °C bis zu einem SiH-Umsatz von >95% umgesetzt. Das Reaktionsprodukt wurde 2 h bei 120 °C und einem Vakuum von 1 mbar destilliert, um Toluol, überschüssiges AGE und andere flüchtige Nebenbestandteile abzutrennen.
Das leicht opake Epoxysiloxan-Produkt wurde daraufhin in 300 ml Isopropanol gelöst, mit 51,6 g (500 mmol) *N,N*-Dimethylglycin versetzt und für 6 h auf 80 °C erhitzt.
352,1 g Propylenglycol wurden zugeben und das Isopropanol im Vakuum bei 100 mbar und 80 °C abdestilliert. Es wurde ein leicht gelbes, leicht opakes Produkt erhalten, das 50% Propylenglycol enthält und im ¹H-NMR einen Epoxyumsatz von >98% zeigt.

### Beispiel 3: Herstellung eines Polysiloxans mit Betain- und Polyethermodifikation:

In einem mit Rührwerk, Rückflusskühler, Thermometer und Tropftrichter ausgerüsteten Vierhalskolben wurden 141,5 g (50,0 mmol bzw. 500,0 mmol SiH) eines SiH-funktionellen Siloxanes der allgemeinen Formel Me₃SiO-(SiMe₂O)₂₈(SiMeHO)₁₀SiMe₃ vorgelegt, auf 120 °C aufgeheizt und mit 11,6 mg (Cyclohexen)₂Pt₂Cl₄ und 0,32 g *N-*Ethyl-*N,N*-diisopropylamin versetzt. 34,2 g (300 mmol) Allylglycidylether (AGE) wurden unter Rühren zugetropft und 1 h bei 120 °C rühren gelassen. Sodann wurden 65,0 g (2,5 mmol) eines Divinylsiloxans der allgemeinen Formel CH₂=CH-SiMe₂O-(SiMe₂O)₃₄₈-SiMe₂-CH=CH₂ zugegeben und eine weitere Stunde bei 120 °C umgesetzt, bevor 398,7 g (350 mmol) eines Allylpolyethers der allgemeinen Formel H₂C=CH-CH₂-(OCH₂CH₂)₁₅-(OCH₂CH(CH₃))₇-OCH₃ zugetropft wurde. Nach Zugabe weiterer 3,5 mg (Cyclohexen)₂Pt₂Cl₄ wurde nach 3 h bei 120 °C ein SiH-Umsatz von >95% erreicht. Das Reaktionsproduktgemisch wurde 2 h bei 120 °C und einem Vakuum von 1 mbar destilliert, um überschüssiges AGE und andere flüchtige Nebenbestandteile abzutrennen.
Das milchig-trübe Epoxy-Polyether-Siloxan-Produkt wurde daraufhin in 700 ml Isopropanol gelöst, mit 30,9 g (300 mmol) *N,N*-Dimethylglycin versetzt und für 6 h auf 80 °C erhitzt. 670,0 g Propylenglycol wurden zugeben und das Isopropanol im Vakuum bei 100 mbar und 80 °C abdestilliert. Es wurde ein leicht gelbes, opakes Produkt erhalten, das 50% Propylenglycol enthält.

### Beispiel 4: Herstellung eines Polysiloxans mit Betain- und C12-Alkylmodifikation:

In einem mit Rührwerk, Rückflusskühler, Thermometer und Tropftrichter ausgerüsteten Vierhalskolben wurden 61,3 g (3,3 mmol) eines Divinylsiloxans der allgemeinen Formel CH₂=CH-SiMe₂O-(SiMe₂O)₂₄₈-SiMe₂-CH=CH₂, 33,7 g (200 mmol) 1-Dodecen und 51,4 g (450 mmol) Allylglycidylether (AGE) in 300 ml Toluol gelöst, auf 100 °C aufgeheizt und mit 4,4 mg (NH₃)₂PtCl₂ versetzt. 141,5 g (50,0 mmol bzw. 500,0 mmol SiH) eines SiH-funktionellen Siloxanes der allgemeinen Formel Me₃SiO-(SiMe₂O)₂₈(SiMeHO)₁₀SiMe₃ wurden unter Rühren zugetropft und das Reaktionsgemisch 4 h bei 100 °C bis zu einem SiH-Umsatz von >95% umgesetzt. Das Reaktionsproduktgemisch wurde 2 h bei 120 °C und einem Vakuum von 1 mbar destilliert, um Toluol, überschüssiges AGE und Dodecen sowie andere flüchtige Nebenbestandteile abzutrennen.
Das leicht trübe Epoxy-Alkyl-Siloxan-Produkt wurde daraufhin in 300 ml Isopropanol gelöst, mit 36,1 g (350 mmol) *N,N*-Dimethylglycin versetzt und für 6 h auf 80 °C erhitzt. Das Isopropanol wurde im Vakuum bei 100 mbar und 80 °C abdestilliert. Es wurde ein viskoses, leicht gelbes, leicht trübes Produkt erhalten. Im ¹H-NMR zeigt es einen Epoxyumsatz von >98%.

### Vergleichsbeispiel 5:

Betaingruppen-enthaltendes Siloxan ABIL^{®} B 9950 (kommerziell erhältlich bei Evonik Goldschmidt GmbH, INCI: Dimethicone Propyl PG-Betaine; Aktivgehalt: 30%)

### Vergleichsbeispiel 6:

Polyethergruppen-enthaltendes Siloxan DC 5324 (kommerziell erhältlich bei Dow Corning, INCI: PEG-12 Dimethicone)

### Vergleichsbeispiel 7:

Quatgruppen-haltiges Siloxan ABIL^{®} Quat 3272 (kommerziell erhältlich bei Evonik Goldschmidt GmbH, INCI: Quaternium-80; Aktivgehalt 50%)

### Vergleichsbeispiel 8:

Aminogruppen-haltiges Siloxan DC 2-8566 (kommerziell erhältlich bei Dow Corning, INCI: Amodimethicone)

### Beispiel 9: Herstellung eines Polysiloxans mit Betainmodifikation:

In einem mit Rührwerk, Rückflusskühler, Thermometer und Tropftrichter ausgerüsteten Vierhalskolben wurden 70,0 g (14,9 mmol bzw. 149,0 mmol SiH) eines SiH-funktionellen Siloxanes der allgemeinen Formel HMe₂SiO-(SiMe₂O)₅₅(SiMeHO)₈SiMe₂H in 100 ml Toluol vorgelegt, auf 110 °C aufgeheizt und mit 22,0 mg (Cyclohexen)₂Pt₂Cl₄ und 0,06 g *N*-Ethyl-*N,N*-diisopropylamin versetzt. 8,4 g (73,6 mmol) Allylglycidylether (AGE) wurden unter Rühren zugetropft und 1 h bei 110 °C rühren gelassen. Sodann wurden 20,4 g (0,8 mmol) eines Divinylsiloxans der allgemeinen Formel CH₂=CH-SiMe₂O-(SiMe₂O)₃₄₈-SiMe₂-CH=CH₂ zugegeben und eine weitere Stunde bei 110 °C umgesetzt, bevor 11,0 g (96,4 mmol) Allylglycidether zugetropft wurden. Nach 3 h bei 110 °C wurde ein SiH-Umsatz von >95% erreicht. Das Reaktionsproduktgemisch wurde 2 h bei 120 °C und einem Vakuum von 1 mbar destilliert, um Toluol, überschüssiges AGE und andere flüchtige Nebenbestandteile abzutrennen.
Das trübe Epoxysiloxan-Produkt wurde daraufhin in 150 ml Isopropanol gelöst, mit 15,2g (149,0 mmol) *N,N*-Dimethylglycin versetzt und für 6 h auf 80 °C erhitzt. 122,5 g Propylenglycol wurden zugeben und das Isopropanol im Vakuum bei 100 mbar und 80 °C abdestilliert. Es wurde ein leicht gelbes, opakes Produkt erhalten, das 50% Propylenglycol enthält und im ¹H-NMR einen Epoxyumsatz von >97% zeigt.

### Beispiel 10: Herstellung eines Polysiloxans mit Betainmodifikation:

In einem mit Rührwerk, Rückflusskühler, Thermometer und Tropftrichter ausgerüsteten Vierhalskolben wurden 54,1 g (2,9 mmol) eines α,ω-Divinylsiloxans der allgemeinen Formel CH₂=CH-SiMe₂O-(SiMe₂O)₂₄₈-SiMe₂-CH=CH₂ und 78,0 g (683,4 mmol) Allylglycidylether (AGE) in 300 ml Toluol gelöst, auf 100 °C aufgeheizt und mit 5,7 mg (NH₃)₂PtCl₂ versetzt. 166,9 g (58,3 mmol bzw. 583,2 mmol SiH-Gruppen) eines SiH-funktionellen Siloxans der allgemeinen Formel Me₃SiO-(SiMe₂O)₂₈(SiMeHO)₁₀SiMe₃ wurden unter Rühren zugetropft. Das Reaktionsgemisch ist nach 2 h bei 110 °C bis zu einem SiH-Umsatz von >95% umgesetzt. Das Reaktionsprodukt wurde 2 h bei 120 °C und einem Vakuum von 1 mbar destilliert, um Toluol, überschüssiges AGE und andere flüchtige Nebenbestandteile abzutrennen.
Das leicht opake Epoxysiloxan-Produkt wurde daraufhin in 300 ml Isopropanol gelöst, mit 60,1 g (583,2 mmol) *N,N*-Dimethylglycin versetzt und für 6 h auf 80 °C erhitzt.
347 g Dipropylenglycol wurden zugeben und das Isopropanol im Vakuum bei 100 mbar und 80 °C abdestilliert. Es wurde ein leicht gelbes, leicht opakes Produkt erhalten, das 50% Dipropylenglycol enthält und im ¹H-NMR einen Epoxyumsatz von >98% zeigt.

### Beispiel 11: Herstellung eines Polysiloxans mit Betain- und Quatmodifikation:

In einem mit Rührwerk, Rückflusskühler, Thermometer und Tropftrichter ausgerüsteten Vierhalskolben wurden 65,0 g (2,5 mmol) eines α,ω-Divinylsiloxans der allgemeinen Formel CH₂=CH-SiMe₂O-(SiMe₂O)₃₄₈-SiMe₂-CH=CH₂ und 74,2 g (650 mmol) Allylglycidylether (AGE) in 250 ml Toluol gelöst, auf 100 °C aufgeheizt und mit 4,3 mg (NH₃)₂PtCl₂ versetzt. 141,5 g (50,0 mmol bzw. 500,0 mmol SiH-Gruppen) eines SiH-funktionellen Siloxanes der allgemeinen Formel Me₃SiO-(SiMe₂O)₂₈(SiMeHO)₁₀SiMe₃ wurden unter Rühren zugetropft und das Reaktionsgemisch 2 h bei 100 °C bis zu einem SiH-Umsatz von >95% umgesetzt. Das Reaktionsprodukt wurde 2 h bei 120 °C und einem Vakuum von 1 mbar destilliert, um Toluol, überschüssiges AGE und andere flüchtige Nebenbestandteile abzutrennen.
Das opake Epoxysiloxan-Produkt wurde daraufhin in 250 ml Isopropanol gelöst, mit 45,7g (400,0 mmol) *N,N*-Dimethylglycin und 13,3 g (100,0 mmol) *N,N-*Dimethylaminoethoxyethanol sowie 6,2 g (103,0 mmol) Essigsäure versetzt und für 6 h auf 80 °C erhitzt. 329 g Propylenglycol wurden zugeben und das Isopropanol im Vakuum bei 100 mbar und 80 °C abdestilliert. Es wurde ein leicht gelbes, opakes Produkt erhalten, das 50% Propylenglycol enthält und im ¹H-NMR einen Epoxyumsatz von >97% zeigt.

### Anwendungsbeispiele:

### Anwendungstechnische Eigenschaften

Die Formulierungsbestandteile sind in den Zusammensetzungen in Form der allgemein anerkannten INCI-Nomenklatur unter Verwendung der englischen Begriffe benannt. Alle Konzentrationen in den Anwendungsbeispielen sind in Gewichtsprozent angegeben.

### 1.) Austestung der Konditionierung von Haar mittels Sensoriktests:

Für die anwendungstechnische Beurteilung der Konditionierung von Haar wurden die erfindungsgemäßen Beispiele 1 und 2 und die Vergleichsbeispiele 5, 6 und 8 in einfachen Shampooformulierungen eingesetzt.

Die Anwendungseigenschaften beim Einsatz in einem Shampoo wurden in den folgenden Rezepturen überprüft:

**Tab. 1: Shampooformulierungen zur Austestung der haar-konditionierenden Eigenschaften.**

| **Formulierungsbeispiele** | **0a** | **1a** | **2a** | **V3a** | **V4a** | **V5a** |
|---|---|---|---|---|---|---|
| Texapon NSO^{®}, 28%-ig, Cognis (INCI: Sodium Laureth Sulfate) | 32,0% | 32,0% | 32,0% | 32,0% | 32,0% | 32,0% |
| TEGO^{®} Betain F 50, 38%-ig, Evonik Goldschmidt GmbH (INCI: Cocamidopropyl Betaine) | 8,0% | 8,0% | 8,0% | 8,0% | 8,0% | 8,0% |
| Jaguar 162, Rhodia (INCI: Guar Hydroxypropyl trimonium Chloride) (Kationisches Polymer zur Verbesserung der Wirksamkeit von Konditioniermitteln) | 0,2% | 0,2% | 0,2% | 0,2% | 0,2% | 0,2% |
| Wasser, demineralisiert | | | ad 100,0% | | | |
| Zitronensäure | | | ad. pH 6,0 ± 0,3 | | | |
| Beispiel 1 (erfindungsgemäß, 50% Silikon Aktivgehalt) | | 1,0% | | | | |
| Beispiel 2 (erfindungsgemäß, 50% Silikon Aktivgehalt) | | | 1,0% | | | |
| Vergleichsbeispiel 5 (nicht erfindungsgemäß, 30% Silikon Aktivgehalt) | | | | 1,67% | | |
| Vergleichsbeispiel 6 (nicht erfindungsgemäß) | | | | | 0,5% | |
| Vergleichsbeispiel 8 (nicht erfindungsgemäß) | | | | | | 0,5% |

Zur Bewertung der Eigenschaften der Shampooformulierung wurde im Testablauf keine Nachbehandlung mit einer Spülung durchgeführt.
Für die anwendungstechnische Beurteilung werden Haartressen, die für sensorische Tests verwendet werden, durch eine Dauerwellbehandlung und eine Bleichbehandlung standardisiert vorgeschädigt. Dazu werden friseurübliche Produkte verwendet. Der Testablauf, die verwendeten Basismaterialien sowie die Details der Beurteilungskriterien sind in DE 103 27 871 beschrieben.
Standardisierte Behandlung von vorgeschädigten Haarsträhnen mit konditionierenden Proben:
Die, wie oben beschrieben, vorgeschädigten Haarsträhnchen werden wie folgt mit dem oben beschriebenen Shampoo behandelt:
   Die Haarsträhnen werden unter fließendem, warmem Wasser benetzt. Das überschüssige Wasser wird leicht von Hand ausgedrückt, dann wird das Shampoo aufgebracht und sanft im Haar eingearbeitet (1 ml/Haarsträhne (2 g)). Nach einer Verweilzeit von 1 min wird das Haar für 1 min gespült.
Vor der sensorischen Beurteilung wird das Haar an der Luft bei 50% Luftfeuchtigkeit und 25 °C für mindestens 12 h getrocknet.
Beurteilungskriterien:
Die sensorischen Bewertungen erfolgen nach Noten, die auf einer Skala von 1 bis 5 vergeben werden, wobei 1 die schlechteste und 5 die beste Bewertung ist. Die einzelnen Testkriterien erhalten jeweils eine eigene Bewertung.
Die Testkriterien sind: Nasskämmbarkeit, Nassgriff, Trockenkämmbarkeit, Trockengriff, Aussehen/Glanz.

In der folgenden Tabelle werden die Ergebnisse der sensorischen Beurteilung der wie oben beschrieben durchgeführten Behandlung der Haarstränchen mit der erfindungsgemäßen Formulierungen 1a und 2a, den Vergleichsformulierungen V3a, V4a und V5a und der Kontrollformulierung 0a (Placebo ohne Testsubstanz) verglichen.

**Tab. 2: Ergebnisse der Konditionierung von Haar aus Shampoo-Formulierung.**

| | **Nasskämm barkeit** | **Nassgriff** | **Trocken kämmbarkeit** | **Trockengriff** | **Glanz** |
|---|---|---|---|---|---|
| Erfindungsgemäße Formulierung 1a | 4,1 | 4,1 | 3,6 | 4,2 | 4,3 |
| Erfindungsgemäße Formulierung 2a | 4,2 | 4,0 | 3,8 | 4,0 | 4,4 |
| Vergleichsformulierung V3a (nicht erfindungsgemäß) | 3,0 | 3,1 | 3,2 | 3,4 | 3,3 |
| Vergleichsformulierung V4a (nicht erfindungsgemäß) | 3,3 | 3,4 | 3,3 | 3,4 | 3,4 |
| Vergleichsformulierung V5a (nicht erfindungsgemäß) | 3,7 | 3,6 | 3,3 | 3,5 | 3,5 |
| Kontrollformulierung 0a (Placebo) | 2,1 | 2,3 | 2,5 | 3,1 | 2,3 |

Die Ergebnisse zeigen in überraschender Weise, dass die erfindungsgemäße Formulierung 1 a und 2a mit erfindungsgemäßen Beispielen 1 und 2 signifikant bessere Bewertungen erhalten als die Vergleichsformulierung V3a, V4a und V5a mit den Vergleichsbeispielen 5, 6 und 8 nach Stand der Technik.

### 2.) Austestung der Konditionierung von Haut mittels eines Handwaschtests:

Zur Bewertung der Konditionierung von Haut (Hautpflegeleistung) der erfindungsgemäßen Beispiele 1 und 2 in wässrigen, tensidischen Formulierungen wurden sensorische Handwaschtests im Vergleich zu den Vergleichsbeispielen 5, 6 und 8 nach dem Stand der Technik durchgeführt.
Die Vergleichsbeispiele 5, 6 und 8 sind in der Industrie als Pflegewirkstoff weit verbreitet und gelten als hochwirksame Pflegewirkstoffe in wässrigen, tensidischen Formulierungen.
Eine Gruppe bestehend aus 10 trainierten Prüfpersonen wusch sich dabei definiert die Hände und bewertete Schaumeigenschaften und Hautgefühl anhand einer Notenskala von 1 (schlecht) bis 5 (sehr gut).
Die eingesetzten Produkte wurden jeweils in einer standardisierten Tensidformulierung (Tabelle 3) getestet. Als Kontrollformulierung 0b wird eine Formulierung ohne Zusatz eines organomodifizierten Siloxans verwendet.

**Tab. 3: Testformulierungen für Handwaschtest.**

| **Formulierungsbeispiele** | **0b** | **1b** | **2b** | **V3b** | **V4b** | **V5b** |
|---|---|---|---|---|---|---|
| Texapon NSO^{®}, 28%-ig, Cognis (INCI: Sodium Laureth Sulfate) | 32,0% | 32,0% | 32,0% | 32,0% | 32,0% | 32,0% |
| TEGO^{®} Betain F 50, 38%-ig, Evonik Goldschmidt GmbH (INCI: Cocamidopropyl Betaine) | 8,0% | 8,0% | 8,0% | 8,0% | 8,0% | 8,0% |
| NaCl | 2,0% | 2,0% | 2,0% | 2,0% | 2,0% | 2,0% |
| Wasser, demineralisiert | | | ad 100,0% | | | |
| Beispiel 1 (erfindungsgemäß, 50% Silikon Aktivgehalt) | | 1,0% | | | | |
| Beispiel 2 (erfindungsgemäß, 50% Silikon Aktivgehalt) | | | 1,0% | | | |
| Vergleichsbeispiel 5 (nicht erfindungsgemäß, 30% Silikon Aktivgehalt) | | | | 1,67% | | |
| Vergleichsbeispiel 6 (nicht erfindungsgemäß) | | | | | 0,5% | |
| Vergleichsbeispiel 8 (nicht erfindungsgemäß) | | | | | | 0,5% |

Die sensorischen Testergebnisse sind in Tabelle 4 zusammengefasst.

**Tab. 4: Ergebnisse des Handwaschtests.**

| **Testformulierung** | **0b** | **1b** | **2b** | **V3b** | **V4b** | **V5b** |
|---|---|---|---|---|---|---|
| Hautgefühl während des Waschens | 2,6 | 4,1 | 4,0 | 3,5 | 3,4 | 3,6 |
| Hautglätte | 1,4 | 3,9 | 4,1 | 3,4 | 3,5 | 3,4 |
| Hautweichheit | 2,0 | 3,6 | 3,8 | 3,3 | 3,4 | 3,4 |
| Hautglätte nach 3 min. | 2,6 | 3,9 | 3,8 | 3,1 | 3,0 | 3,4 |
| Hautweichheit nach 3 min. | 2,5 | 3,8 | 4,0 | 3,1 | 3,4 | 3,3 |

In Tabelle 4 sind die Ergebnisse des Handwaschtests dargestellt. Anhand der Messergebnisse wird ersichtlich, dass die erfindungsgemäße Formulierungen 1b und 2b unter Verwendung der erfindungsgemäßen Beispiele 1 und 2 in allen Applikationseigenschaften im Vergleich zu den Vergleichsformulierungen V3b, V4b und V5b nach dem Stand der Technik überlegen sind.
Vor diesem Hintergrund sind die Ergebnisse der erfindungsgemäßen Formulierungen 1 b und 2b als sehr gut zu bezeichnen.
Anhand der Messwerte ist ersichtlich, dass die erfindungsgemäßen Beispiele 1 und 2 in den Formulierungen 1 b und 2b zu einer Verbesserung der Hauteigenschaften im Vergleich zu den Vergleichsbeispielen 5, 6 und 8 führen. Ferner kann man den Messwerten entnehmen, dass die Kontrollformulierung 0b ohne eine Silikonverbindung schlechtere Meßwerte als die anderen Testformulierungen aufweist.

### 3.) Viskositätseffekt:

Zur Überprüfung der Viskositätseffekte der erfindungsgemäßen Beispiele 1 und 2 und der Vergleichsbeispiele 5, 6, 7 und 8 nach dem Stand der Technik wurden diese Verbindungen in zwei typische Shampooformulierungen mit den beiden Verdickern NaCl und dem kommerziell erhältlichen Produkt ANTIL^{®} 171 (Evonik Goldschmidt GmbH; INCI: PEG-18 Glyceryl Oleate/Cocoate) getestet. In einer typischen Shampooformulierung wurde 0,2% Polyquaternium-10 (PQ-10) als Basiskonditionierer bzw. Depositionspolymer verwendet (siehe 3a). In der anderen typischen Shampooformulierung wurde 0,2% Guarquat (siehe 3b) als Basiskonditionierer bzw. Depositionspolymer verwendet.
Die Formulierungen wurden nach der Herstellung für 24 Stunden bei 25 °C gelagert und anschließend die Viskosität mittels eines Brookfield Viskosimeters (Brookfield LVF, Spindel 3, 5 Upm) bei 25 °C gemessen.

### 3a) Viskositätseffekte bei Shampooformulierungen bei Verwendung von Polyquaternium-10 (PQ-10):

Als Kontrollformulierung 0c wird eine Formulierung ohne Zusatz einer Silikonverbindung (Konditionierer) unter Verwendung von 0,2% PQ-10 verwendet. Bei den erfindungsgemäßen Formulierungen 1c und 2c und den Vergleichsformulierungen V3c, V4c, V5c und V6c wurden 0,2% PQ-10 mit jeweils 0,5% Silikonverbindung verwendet.
Die Ergebnisse der Formulierungen 1c und 2c mit den erfindungsgemäßen Beispielen 1 und 2, der Formulierungen V3c, V4c, V5c und V6c mit den Vergleichsbeispielen 5, 6, 7 und 8 nach dem Stand der Technik und der Kontrollformulierung 0c ohne Zusatz einer Silikonverbindung (Testformulierung) sind in Tabelle 5 zusammengefasst.

**Tab. 5: Gemessene Viskositäten bei Verwendung von NaCl und PEG-18 Glyceryl Oleate/Cocoate (ANTIL 171, Evonik Goldschmidt GmbH) zum Verdicken der wässrigen, tensidischen Formulierung.**

| **Formulierungs-Beispiele** | **0c** | **1c** | **2c** | **V3c** | **V4c** | **V5c** | **V6c** |
|---|---|---|---|---|---|---|---|
| Texapon NSO^{®}, 28%-ig, Cognis (INCI: Sodium Laureth Sulfate) | 32,0% | 32,0% | 32,0% | 32,0% | 32,0% | 32,0% | 32,0% |
| TEGO Betain F 50^{®}, 38%-ig, Evonik Goldschmidt GmbH (INCI: Cocamidopropyl Betaine) | 8,0% | 8,0% | 8,0% | 8,0% | 8,0% | 8,0% | 8,0% |
| ANTIL 171, Evonik Goldschmidt GmbH (INCI: PEG-18 Glyceryl Oleate/Cocoate) | 2,5% | 2,5% | 2,5% | 2,5% | 2,5% | 2,5% | 2,5% |
| NaCl | 0,5% | 0,5% | 0,5% | 0,5% | 0,5% | 0,5% | 0,5% |
| Polymer JR 400, Amerchol (INCI: Polyquaternium-10) (Kationisches Polymer zur Verbesserung der Wirksamkeit von Konditioniermitteln) | 0,2% | 0,2% | 0,2% | 0,2% | 0,2% | 0,2% | 0,2% |
| Wasser, demineralisiert | | | ad 100,0% | | | | |
| Beispiel 1 (erfindungsgemäß) | | 1,0% | | | | | |
| Beispiel 2 (erfindungsgemäß) | | | 1,0% | | | | |
| Vergleichsbeispiel 5 (nicht erfindungsgemäß, 30% Silikon Aktivgehalt) | | | | 1,67% | | | |
| Vergleichsbeispiel 6 (nicht erfindungsgemäß) | | | | | 0,5% | | |
| Vergleichsbeispiel 7 (nicht erfindungsgemäß, 50% Silikon Aktivgehalt) | | | | | | 1,0% | |
| Vergleichsbeispiel 8 (nicht erfindungsgemäß) | | | | | | | 0,5% |
| pH | 6 | 6 | 6 | 6 | 6 | 6 | 6 |
| Viskosität [mPas] (nach 24 Stunden) | 6650 | 7730 | 8040 | 6020 | 1280 | 3500 | 2410 |

Anhand der Messergebnisse in Tab. 5 wird eindeutig ersichtlich, dass bei den erfindungsgemäßen wässrigen, tensidischen Formulierungen 1c und 2c keine Erniedrigung der Viskositäten im Vergleich zu der Kontrollformulierung 0c auftritt. Es konnte sogar ein leichter Viskositätsanstieg beobachtet werden. Bei den Vergleichsformulierungen V3c, V4c, V5c und V6c nach dem Stand der Technik kommt es hingegen zu einer starken Abnahme der Viskosität im Vergleich zu der Kontrollformulierung 0c. Dieser Viskositätsabfall ist typisch bei der Verwendung von Silikonverbindungen in wässrigen, tensidischen Formulierungen und erschwert die Entwicklung von Formulierungen mit gut konditionierenden Eigenschaften maßgeblich. Besonders dramatisch ist der beobachtete Viskositätsabfall bei der Vergleichsformulierung V4c bei der Verwendung von PEG-12 Dimethicone.

### 3b) Viskositätseffekte bei Shampooformulierungen bei Verwendung von Guarquat:

Als Kontrollformulierung 0d wird eine Formulierung ohne Zusatz einer Silikonverbindung (Konditionierer) unter Verwendung von 0,2% Guarquat verwendet.
Bei den erfindungsgemäßen Formulierungen 1d und 2d und den Vergleichsformulierungen V3d, V4d, V5d und V6d wurden 0,2% Guarquat mit jeweils 0,5% Silikonverbindung verwendet.

Die Ergebnisse der Formulierungen 1 d und 2d mit den erfindungsgemäßen Beispielen 1 und 2, der Formulierungen V3d, V4d, V5d und V6d mit den Vergleichsbeispielen 5, 6, 7 und 8 nach dem Stand der Technik und der Kontrollformulierung 0d ohne Zusatz einer Silikonverbindung (Testformulierung) sind in Tabelle 6 zusammengefasst.

**Tab. 6: Gemessene Viskositäten bei Verwendung von NaCl und PEG-18 Glyceryl Oleate/Cocoate (ANTIL 171, Evonik Goldschmidt GmbH) zum Verdicken der wässrigen, tensidischen Formulierung.**

| **Formulierungs-Beispiele** | **0d** | **1d** | **2d** | **V3d** | **V4d** | **V5d** | **V6d** |
|---|---|---|---|---|---|---|---|
| Texapon NSO^{®}, 28%-ig, | 32,0% | 32,0% | 32,0% | 32,0% | 32,0% | 32,0% | 32,0% |
| Cognis (INCI: Sodium Laureth Sulfate) | | | | | | | |
| TEGO Betain F 50^{®}, 38%-ig, Evonik Goldschmidt GmbH (INCI: Cocamidopropyl Betaine) | 8,0% | 8,0% | 8,0% | 8,0% | 8,0% | 8,0% | 8,0% |
| ANTIL 171, Evonik Goldschmidt GmbH (INCI: PEG-18 Glyceryl Oleate/Cocoate) | 2,5% | 2,5% | 2,5% | 2,5% | 2,5% | 2,5% | 2,5% |
| NaCl | 0,5% | 0,5% | 0,5% | 0,5% | 0,5% | 0,5% | 0,5% |
| Jaguar 162, Rhodia (INCI: Guar Hydroxypropyl trimonium Chloride) (Kationisches Polymer zur Verbesserung der Wirksamkeit von Konditioniermitteln) | 0,2% | 0,2% | 0,2% | 0,2% | 0,2% | 0,2% | 0,2% |
| Wasser, demineralisiert | | | ad 100,0% | | | | |
| Beispiel 1 (erfindungsgemäß) | | 1,0% | | | | | |
| Beispiel 2 (erfindungsgemäß) | | | 1,0% | | | | |
| Vergleichsbeispiel 5 (nicht erfindungsgemäß, 30% Silikon Aktivgehalt) | | | | 1,67% | | | |
| Vergleichsbeispiel 6 (nicht erfindungsgemäß) | | | | | 0,5% | | |
| Vergleichsbeispiel 7 (nicht erfindungsgemäß, 50% Silikon Aktivgehalt) | | | | | | 1,0% | |
| Vergleichsbeispiel 8 (nicht erfindungsgemäß) | | | | | | | 0,5% |
| pH | 6 | 6 | 6 | 6 | 6 | 6 | 6 |
| Viskosität [mPas] (nach 24 Stunden) | 9013 | 9557 | 10813 | 6020 | 2069 | 4137 | 3744 |

Anhand der Messergebnisse in Tab. 6 wird eindeutig ersichtlich, dass bei den erfindungsgemäßen wässrigen, tensidischen Formulierungen 1d und 2d keine Erniedrigung der Viskositäten im Vergleich zu der Kontrollformulierung 0d auftritt. Es konnte sogar ein leichter Viskositätsanstieg beobachtet werden.
Bei den Vergleichsformulierungen V3d, V4d, V5d und V6d, nach dem Stand der Technik, kommt es hingegen zu einer starken Abnahme der Viskosität im Vergleich zu der Kontrollformulierung 0d. Dieser Viskositätsabfall ist typisch bei der Verwendung von Silikonverbindungen in wässrigen, tensidischen Formulierungen und erschwert die Entwicklung von Formulierungen mit gut konditionierenden Eigenschaften maßgeblich.
Besonders ausgeprägt ist der beobachtete Viskositätsabfall bei der Vergleichsformulierung V4d bei der Verwendung von PEG-12 Dimethicone.

### Formulierungsbeispiele:

Die folgenden Formulierungsbeispiele zeigen, dass erfindungsgemäßen Polysiloxane in einer Vielzahl kosmetischer Formulierungen eingesetzt werden können.

### Formulierungsbeispiel 1: Shampoo

| | |
|---|---|
| TEXAPON^{®} NSO, Cognis, 28%-ig | 32,00% |
| (INCI: Sodium Laureth Sulfate) | |
| Verbindung Beispiel 1 | 0,50% |
| Perfume | 0,50% |
| Water | 57,50% |
| TEGO^{®} Betain F 50, Evonik Goldschmidt GmbH, 38%-ig | 8,00% |
| (INCI: Cocamidopropyl Betaine) | |
| ANTIL^{®} 171, Evonik Goldschmidt GmbH | 1,00% |
| (INCI: PEG-18 Glyceryl Oleate/Cocoate) | |
| NaCl | 0,50% |
| Preservative | q.s. |

### Formulierungsbeispiel 2: Conditioning Shampoo

| | |
|---|---|
| TEXAPON^{®} NSO, Cognis, 28%-ig | 32,00% |
| (INCI: Sodium Laureth Sulfate) | |
| Verbindung Beispiel 2 | 1,00% |
| Perfume | 0,50% |
| Water | 55,70% |
| TEGO^{®} Cosmo C 100, Evonik Goldschmidt GmbH | 1,00% |
| (INCI: Creatine) | |
| Jaguar C-162, Rhodia (INCI: Hydroxypropyl Guar Hydroxypropyltrimonium Chloride) | 0,30% |
| TEGO^{®} Betain F 50, Evonik Goldschmidt GmbH, 38%-ig | 8,00% |
| (INCI: Cocamidopropyl Betaine) | |
| NaCl | 1,50% |
| Preservative | q.s. |

### Formulierungsbeispiel 3: Conditioning Shampoo

| | |
|---|---|
| TEXAPON^{®} NSO, Cognis, 28%-ig | 32,00% |
| (INCI: Sodium Laureth Sulfate) | |
| ANTIL^{®} 200, Evonik Goldschmidt GmbH | 2,00% |
| (INCI: PEG-200 Hydrogenated Glyceryl Palmate; PEG-7 Glyceryl Cocoate) | |
| Verbindung Beispiel 2 | 1,00% |
| Perfume | 0,25% |
| Water | 57,25% |
| Polymer JR 400, Amerchol | 0,20% |
| (INCI: Polyquaternium-10) | |
| TEGO^{®} Betain C 60, Evonik Goldschmidt GmbH, 47%-ig | 7,00% |
| (INCI: Cocamidopropyl Betaine) | |
| NaCl | 0,30% |
| Preservative | q.s. |

### Formulierungsbeispiel 4: Conditioning Shampoo

| | |
|---|---|
| TEXAPON^{®} NSO, Cognis, 28%-ig | 32,00% |
| (INCI: Sodium Laureth Sulfate) | |
| ANTIL^{®} 200, Evonik Goldschmidt GmbH | 2,00% |
| (INCI: PEG-200 Hydrogenated Glyceryl Palmate; PEG-7 Glyceryl Cocoate) | |
| ABIL^{®} Quat 3272, Evonik Goldschmidt GmbH, 50%-ig | 0,75% |
| (INCI: Quaternium-80) | |
| Verbindung Beispiel 3 | 1,00% |
| Perfume | 0,25% |
| Water | 55,50% |
| Polymer JR 400, Amerchol | 0,20% |
| (INCI: Polyquaternium-10) | |
| TEGO^{®} Betain F 50, Evonik Goldschmidt GmbH, 38%-ig | 8,00% |
| (INCI: Cocamidopropyl Betaine) | |
| NaCl | 0,30% |
| Preservative | q.s. |

### Formulierungsbeispiel 5: Conditioning Shampoo

| | |
|---|---|
| TEXAPON^{®} NSO, Cognis, 28%-ig | 32,00% |
| (INCI: Sodium Laureth Sulfate) | |
| ANTIL^{®} 200, Evonik Goldschmidt GmbH | 2,00% |
| (INCI: PEG-200 Hydrogenated Glyceryl Palmate; PEG-7 Glyceryl Cocoate) | |
| ABIL^{®} B 8832, Evonik Goldschmidt GmbH | 1,00% |
| (INCI: Bis-PEG/PPG-20/20 Dimethicone) | |
| Verbindung Beispiel 4 | 0,50% |
| Perfume | 0,25% |
| Water | 55,55% |
| Polymer JR 400, Amerchol | 0,20% |
| (INCI: Polyquaternium-10) | |
| TEGO^{®} Betain F 50, Evonik Goldschmidt GmbH, 38%-ig | 8,00% |
| (INCI: Cocamidopropyl Betaine) | |
| NaCl | 0,30% |
| Preservative | q.s. |

### Formulierungsbeispiel 6: Conditioning Shampoo

| | |
|---|---|
| TEXAPON^{®} NSO, Cognis, 28%-ig | 32,00% |
| (INCI: Sodium Laureth Sulfate) | |
| VARISOFT^{®} PATC, Evonik Goldschmidt GmbH | 1,50% |
| (INCI: Palmitamidopropyltrimonium Chloride) | |
| REWODERM^{®} LI S 80, Evonik Goldschmidt GmbH | 2,00% |
| (INCI: PEG-200 Hydrogenated Glyceryl Palmate; PEG-7 Glyceryl Cocoate) | |
| Verbindung Beispiel 4 | 0,50% |
| Perfume | 0,25% |
| Water | 54,05% |
| TEGO^{®} Cosmo C 100, Evonik Goldschmidt GmbH | 1,00% |
| (INCI: Creatine) | |
| Jaguar C-162, Rhodia | 0,20% |
| (INCI: Hydroxypropyl Guar Hydroxypropyltrimonium Chloride) | |
| TEGO^{®} Betain F 50, Evonik Goldschmidt GmbH, 38%-ig | 8,00% |
| (INCI: Cocamidopropyl Betaine) | |
| NaCl | 0,50% |
| Preservative | q.s. |

### Formulierungsbeispiel 7: Conditioning Shampoo

| | |
|---|---|
| TEXAPON^{®} NSO, Cognis, 28%-ig | 32,00% |
| (INCI: Sodium Laureth Sulfate) | |
| REWODERM^{®} LI S 80, Evonik Goldschmidt GmbH | 2,00% |
| (INCI: PEG-200 Hydrogenated Glyceryl Palmate; PEG-7 Glyceryl Cocoate) | |
| Verbindung Beispiel 1 | 0,50% |
| Perfume | 0,25% |
| Water | 55,55% |
| TEGO^{®} Cosmo C 100, Evonik Goldschmidt GmbH | 1,00% |
| (INCI: Creatine) | |
| Jaguar C-162, Rhodia (INCI: Hydroxypropyl Guar Hydroxypropyltrimonium Chloride) | 0,20% |
| TEGO^{®} Betain F 50, Evonik Goldschmidt GmbH, 38%-ig | 8,00% |
| (INCI: Cocamidopropyl Betaine) | |
| NaCl | 0,50% |
| Preservative | q.s. |

### Formulierungsbeispiel 8: Pearlized Shampoo

| | |
|---|---|
| TEXAPON^{®} NSO, Cognis, 28%-ig | 32,00% |
| (INCI: Sodium Laureth Sulfate) | |
| Verbindung Beispiel 2 | 0,50% |
| Perfume | 0,25% |
| Water | 55,25% |
| TEGO^{®} Betain F 50, Evonik Goldschmidt GmbH, 38%-ig | 8,00% |
| (INCI: Cocamidopropyl Betaine) | |
| TEGO^{®} Pearl N 300, Evonik Goldschmidt GmbH | 2,00% |
| (INCI: Glycol Distearate; Laureth-4; Cocamidopropyl Betaine) | |
| ANTIL^{®} 171, Evonik Goldschmidt GmbH | 1,50% |
| (INCI: PEG-18 Glyceryl Oleate/Cocoate) | |
| NaCl | 0,50% |
| Preservative | q.s. |

### Formulierungsbeispiel 9: 2 in 1 Shampoo

| | |
|---|---|
| TEXAPON^{®} NSO, Cognis, 28%-ig | 32,00% |
| (INCI: Sodium Laureth Sulfate) | |
| VARISOFT^{®} PATC, Evonik Goldschmidt GmbH | 1,50% |
| (INCI: Palmitamidopropyltrimonium Chloride) | |
| REWODERM^{®} LI S 80, Evonik Goldschmidt GmbH | 2,00% |
| (INCI: PEG-200 Hydrogenated Glyceryl Palmate; PEG-7 Glyceryl Cocoate) | |
| Verbindung Beispiel 1 | 0,50% |
| Verbindung Beispiel 2 | 0,50% |
| Perfume | 0,25% |
| Water | 54,05% |
| TEGO^{®} Cosmo C 100, Evonik Goldschmidt GmbH | 0,50% |
| (INCI: Creatine) | |
| Jaguar C-162, Rhodia | 0,20% |
| (INCI: Hydroxypropyl Guar Hydroxypropyltrimonium Chloride) | |
| TEGO^{®} Betain F 50, Evonik Goldschmidt GmbH, 38%-ig | 8,00% |
| (INCI: Cocamidopropyl Betaine) | |
| NaCl | 0,50% |
| Preservative | q.s. |

### Formulierungsbeispiel 10: Rinse-Off Conditioner

| | |
|---|---|
| Water | 90,50% |
| VARISOFT^{®} BT 85, Evonik Goldschmidt GmbH | 3,00% |
| (INCI: Behentrimonium Chloride) | |
| Verbindung Beispiel 2 | 1,50% |
| TEGO^{®} Alkanol 1618, Evonik Goldschmidt GmbH | 5,00% |
| (INCI: Cetearyl Alcohol) | |
| Preservative, Perfume | q.s. |

### Formulierungsbeispiel 11: Rinse-Off Conditioner

| | |
|---|---|
| Water | 90,20% |
| VARISOFT^{®} EQ 65, Evonik Goldschmidt GmbH | 2,00% |
| (INCI: Distearyl Dimonium Chloride; Cetearyl Alcohol) | |
| VARISOFT^{®} BT 85, Evonik Goldschmidt GmbH | 2,00% |
| (INCI: Behentrimonium Chloride) | |
| Verbindung Beispiel 1 | 0,80% |
| TEGO^{®} Alkanol 1618, Evonik Goldschmidt GmbH | 5,00% |
| (INCI: Cetearyl Alcohol) | |
| Preservative, Perfume | q.s. |

### Formulierungsbeispiel 12: Rinse-Off Conditioner

| | |
|---|---|
| Water | 89,20% |
| VARISOFT^{®} EQ 65, Evonik Goldschmidt GmbH | 2,00% |
| (INCI: Distearyl Dimonium Chloride; Cetearyl Alcohol) | |
| VARISOFT^{®} BT 85, Evonik Goldschmidt GmbH | 2,00% |
| (INCI: Behentrimonium Chloride) | |
| ABIL^{®} Quat 3272, Evonik Goldschmidt GmbH, 50%-ig | 1,00% |
| (INCI: Quaternium-80) | |
| Verbindung Beispiel 1 | 0,80% |
| TEGO^{®} Alkanol 1618, Evonik Goldschmidt GmbH | 5,00% |
| (INCI: Cetearyl Alcohol) | |
| Preservative, Perfume | q.s. |

### Formulierungsbeispiel 13: Rinse-Off Conditioner

| | |
|---|---|
| TEGINACID^{®} C, Evonik Goldschmidt GmbH | 0,50% |
| (INCI: Ceteareth-25) | |
| TEGO^{®} Alkanol 16, Evonik Goldschmidt GmbH | 2,00% |
| (INCI: Cetyl Alcohol) | |
| TEGO^{®} Amid S 18, Evonik Goldschmidt GmbH | 1,00% |
| (INCI: Stearamidopropyl Dimethylamine) | |
| Verbindung Beispiel 2 | 1,50% |
| Propylene Glycol | 2,00% |
| Citric Acid Monohydrate | 0,30% |
| Water | 92,70% |
| Preservative, Perfume | q.s. |

### Formulierungsbeispiel 14: Rinse-Off Conditioner

| | |
|---|---|
| TEGINACID^{®} C, Evonik Goldschmidt GmbH | 0,50% |
| (INCI: Ceteareth-25) | |
| TEGO^{®} Alkanol 16, Evonik Goldschmidt GmbH | 5,00% |
| (INCI: Cetyl Alcohol) | |
| TEGOSOFT^{®} DEC, Evonik Goldschmidt GmbH | 1,00% |
| (INCI: Diethylhexyl Carbonate) | |
| Verbindung Beispiel 1 | 1,50% |
| Water | 89,20% |
| TEGO^{®} Cosmo C 100, Evonik Goldschmidt GmbH | 0,50% |
| (INCI: Creatine) | |
| Propylene Glycol | 2,00% |
| Citric Acid Monohydrate | 0,30% |
| Preservative, Perfume | q.s. |

### Formulierungsbeispiel 15: Leave-In Conditioner Spray

| | |
|---|---|
| Lactic Acid, 80% | 0,40% |
| Water | 95,60% |
| TEGO^{®} Amid S 18, Evonik Goldschmidt GmbH | 1,20% |
| (INCI: Stearamidopropyl Dimethylamine) | |
| TEGIN^{®} G 1100 Pellets, Evonik Goldschmidt GmbH | 0,90% |
| (INCI: Glycol Distearate) | |
| TEGO^{®} Care PS, Evonik Goldschmidt GmbH | 1,20% |
| (INCI: Methyl Glucose Sesquistearate) | |
| TEGOSOFT^{®} DEC, Evonik Goldschmidt GmbH | 0,30% |
| (INCI: Diethylhexyl Carbonate) | |
| Verbindung Beispiel 4 | 0,40% |
| Preservative, Perfume | q.s. |

### Formulierungsbeispiel 16: Leave-In Conditioner Spray

| | |
|---|---|
| TAGAT^{®} CH-40, Evonik Goldschmidt GmbH | 2,00% |
| (INCI: PEG-40 Hydrogenated Castor Oil) | |
| Ceramide VI, Evonik Goldschmidt GmbH | 0,05% |
| (INCI: Ceramide 6 II) | |
| Perfume | 0,20% |
| Water | 90,95% |
| Verbindung Beispiel 1 | 0,50% |
| LACTIL^{®}, Evonik Goldschmidt GmbH | 2,00% |
| (INCI: Sodium Lactate; Sodium PCA; Glycine; Fructose; Urea; Niacinamide; Inositol; Sodium Benzoate; Lactic Acid) | |
| TEGO^{®} Betain F 50, Evonik Goldschmidt GmbH, 38%-ig | 2,30% |
| (INCI: Cocamidopropyl Betaine) | |
| Citric Acid (10% in water) | 2,00% |

### Formulierungsbeispiel 17: Creamy Shaving Foam

| | |
|---|---|
| Water | 50,00% |
| Coconut Fatty Acid | 1,40% |
| Monoethanolamine | 1,30% |
| Myristic Acid | 3,50% |
| TEGOSOFT^{®} LSE 65 K Evonik Goldschmidt GmbH | 2,00% |
| (INCI: Sucrose Cocoate) | |
| TEGO^{®} Betain 810 Evonik Goldschmidt GmbH | 7,60% |
| (INCI: Capryl/Capramidopropyl Betaine) | |
| Glycerin | 5,00% |
| Verbindung Beispiel 1 | 1,70% |
| Perfume | 0,30% |
| Water | 26,50% |
| TEGOCEL^{®} HPM 50, Evonik Goldschmidt GmbH | 0,70% |
| (INCI: Hydroxypropyl Methylcellulose) | |

### Formulierungsbeispiel 18: Body Wash

| | |
|---|---|
| TEXAPON^{®} NSO, Cognis, 28%-ig | 30,00% |
| (INCI: Sodium Laureth Sulfate) | |
| TEGOSOFT^{®} PC 31, Evonik Goldschmidt GmbH | 0,50% |
| (INCI: Polyglyceryl-3 Caprate) | |
| Verbindung Beispiel 1 | 0,30% |
| Perfume | 0,30% |
| Water | 54,10% |
| TEGOCEL^{®} HPM 4000, Evonik Goldschmidt GmbH | 0,30% |
| (INCI: Hydroxypropyl Methylcellulose) | |
| REWOTERIC^{®} AM C, Evonik Goldschmidt GmbH, 32%-ig (INCI: | 10,00% |
| Sodium Cocoamphoacetate) | |
| Citric Acid Monohydrate | 0,50% |
| REWODERM^{®} LI S 80, Evonik Goldschmidt GmbH | 2,00% |
| (INCI: PEG-200 Hydrogenated Glyceryl Palmate; PEG-7 Glyceryl Cocoate) | |
| TEGO^{®} Pearl N 300, Evonik Goldschmidt GmbH | 2,00% |
| (INCI: Glycol Distearate; Laureth-4; Cocamidopropyl Betaine) | |

### Formulierungsbeispiel 19: Mild Shower Bath

| | |
|---|---|
| TEXAPON^{®} NSO, Cognis, 28%-ig | 27,00% |
| (INCI: Sodium Laureth Sulfate) | |
| REWOPOL^{®} SB FA 30, Evonik Goldschmidt GmbH, 40%-ig | 12,00% |
| (INCI: Disodium Laureth Sulfosuccinate) | |
| TEGOSOFT^{®} LSE 65 K SOFT, Evonik Goldschmidt GmbH | 2,00% |
| (INCI: Sucrose Cocoate) | |
| Water | 39,00% |
| REWOTERIC^{®} AM C, Evonik Goldschmidt GmbH, 32%-ig (INCI: Sodium Cocoamphoacetate) | 13,00% |
| Verbindung Beispiel 2 | 0,50% |
| Citric Acid (30% in water) | 3,00% |
| ANTIL^{®} 171, Evonik Goldschmidt GmbH | 1,50% |
| (INCI: PEG-18 Glyceryl Oleate/Cocoate) | |
| TEGO^{®} Pearl N 300, Evonik Goldschmidt GmbH | 2,00% |
| (INCI: Glycol Distearate; Laureth-4; Cocamidopropyl Betaine) | |

### Formulierungsbeispiel 20: Leave-In Conditioner Foam

| | |
|---|---|
| Verbindung Beispiel 1 | 0,50% |
| TAGAT^{®} CH 40, Evonik Goldschmidt GmbH | 0,50% |
| (INCI: PEG-40 Hydrogenated Castor Oil) | |
| Perfume | 0,30% |
| TEGO^{®} Betain 810, Evonik Goldschmidt GmbH | 2,00% |
| (INCI: Capryl/Capramidopropyl Betaine) | |
| Water | 94,00% |
| TEGO^{®} Cosmo C 100, Evonik Goldschmidt GmbH | 0,50% |
| (INCI: Creatine) | |
| TEGOCEL^{®} HPM 50, Evonik Goldschmidt GmbH | 0,30% |
| (INCI: Hydroxypropyl Methylcellulose) | |
| VARISOFT^{®} 300, Evonik Goldschmidt GmbH | 1,30% |
| (INCI: Cetrimonium Chloride) | |
| LACTIL^{®} Evonik Goldschmidt GmbH | 0,50% |
| (INCI: Sodium Lactate; Sodium PCA; Glycine; Fructose; Urea; Niacinamide; Inositol; Sodium Benzoate; Lactic Acid) | |
| Citric Acid (30% in water) | 0,10% |
| Preservative | q.s. |

### Formulierungsbeispiel 21: Strong Hold Styling Gel

| | |
|---|---|
| TEGO^{®} Carbomer 141, Evonik Goldschmidt GmbH | 1,20% |
| (INCI: Carbomer) | |
| Water | 67,00% |
| NaOH, 25% | 2,70% |
| PVP/VA W-735, ISP | 16,00% |
| (INCI: PVPNA Copolymer) | |
| Verbindung Beispiel 1 | 0,50% |
| Alcohol Denat. | 10,00% |
| TAGAT^{®} O 2 V, Evonik Goldschmidt GmbH | 2,00% |
| (INCI: PEG-20 Glyceryl Oleate) | |
| Perfume | 0,30% |
| ABIL^{®} B 88183, Evonik Goldschmidt GmbH | 0,30% |
| (INCI: PEG/PPG-20/6 Dimethicone) | |
| Preservative | q.s. |

### Formulierungsbeispiel 22: Schaumiges Körperpflegemittel

| | |
|---|---|
| TEXAPON^{®} NSO, Cognis, 28%-ig | 14,30% |
| (INCI: Sodium Laureth Sulfate) | |
| Perfume | 0,30% |
| Verbindung Beispiel 4 | 0,50% |
| REWOTERIC^{®} AM C, Evonik Goldschmidt GmbH, 32%-ig | 8,00% |
| (INCI: Sodium Cocoamphoacetate) | |
| Water | 74,90% |
| TEGOCEL^{®} HPM 50, Evonik Goldschmidt GmbH | 0,50% |
| (INCI: Hydroxypropyl Methylcellulose) | |
| LACTIL^{®}, Evonik Goldschmidt GmbH | 1,00% |
| (INCI: Sodium Lactate; Sodium PCA; Glycine; Fructose; Urea; Niacinamide; Inositol; Sodium Benzoate; Lactic Acid) | |
| Citric Acid Monohydrate | 0,50% |

### Formulierungsbeispiel 23: Körperpflegemittel

| | |
|---|---|
| TEXAPON^{®} NSO, Cognis, 28%-ig | 30,00% |
| (INCI: Sodium Laureth Sulfate) | |
| TEGOSOFT^{®} PC 31, Evonik Goldschmidt GmbH | 0,50% |
| (INCI: Polyglyceryl-3 Caprate) | |
| Verbindung Beispiel 4 | 0,50% |
| Perfume | 0,30% |
| Water | 53,90% |
| TEGOCEL^{®} HPM 4000, Evonik Goldschmidt GmbH | 0,30% |
| (INCI: Hydroxypropyl Methylcellulose) | |
| REWOTERIC^{®} AM C, Evonik Goldschmidt GmbH, 32%-ig | 10,00% |
| (INCI: Sodium Cocoamphoacetate) | |
| Citric Acid Monohydrate | 0,50% |
| REWODERM^{®} LI S 80, Evonik Goldschmidt GmbH | 2,00% |
| (INCI: PEG-200 Hydrogenated Glyceryl Palmate; PEG-7 Glyceryl Cocoate) | |
| TEGO^{®} Pearl N 300, Evonik Goldschmidt GmbH | 2,00% |
| (INCI: Glycol Distearate; Laureth-4; Cocamidopropyl Betaine) | |

### Formulierungsbeispiel 24: Schaumiges Körperpflegemittel

| | |
|---|---|
| TEXAPON^{®} NSO, Cognis, 28%-ig (INCI: Sodium Laureth Sulfate) | 14,30% |
| Perfume | 0,30% |
| Verbindung Beispiel 3 | 1,00% |
| REWOTERIC^{®} AM C, Evonik Goldschmidt GmbH, 32%-ig (INCI: Sodium Cocoamphoacetate) | 8,00% |
| Water | 74,60% |
| Polyquaternium-7 | 0,30% |
| LACTIL^{®}, Evonik Goldschmidt GmbH (INCI: Sodium Lactate; Sodium PCA; Glycine; Fructose; Urea; Niacinamide; Inositol; Sodium Benzoate; Lactic Acid) | 1,00% |
| Citric Acid Monohydrate | 0,50% |

### Formulierungsbeispiel 25: Mild Foam Bath

| | |
|---|---|
| TEXAPON^{®} NSO, Cognis, 28%-ig (INCI: Sodium Laureth Sulfate) | 27,00% |
| REWOPOL^{®} SB FA 30, Evonik Goldschmidt GmbH, 40%-ig (INCI: Disodium Laureth Sulfosuccinate) | 12,00% |
| TEGOSOFT^{®} LSE 65 K SOFT, Evonik Goldschmidt GmbH (INCI: Sucrose Cocoate) | 2,00% |
| Water | 39,00% |
| REWOTERIC^{®} AM C, Evonik Goldschmidt GmbH, 32%-ig (INCI: Sodium Cocoamphoacetate) | 13,00% |
| Verbindung Beispiel 2 | 0,50% |
| Citric Acid (30% in water) | 3,00% |
| ANTIL^{®} 171, Evonik Goldschmidt GmbH (INCI: PEG-18 Glyceryl Oleate/Cocoate) | 1,50% |
| TEGO^{®} Pearl N 300, Evonik Goldschmidt GmbH (INCI: Glycol Distearate; Laureth-4; Cocamidopropyl Betaine) | 2,00% |

### Formulierungsbeispiel 26: Schaumiges Körperpflegemittel

| | |
|---|---|
| TEGOCEL^{®} HPM 50, Evonik Goldschmidt GmbH (INCI: Hydroxypropyl Methylcellulose) | 0,50% |
| Water | 80,10% |
| Perfume | 0,20% |
| Verbindung Beispiel 1 | 0,50% |
| TEGOSOFT^{®} GC, Evonik Goldschmidt GmbH (INCI: PEG-7 Glyceryl Cocoate) | 1,30% |
| TEGO^{®} Betain 810, Evonik Goldschmidt GmbH (INCI: Capryl/Capramidopropyl Betaine) | 16,90% |
| LACTIL^{®}, Evonik Goldschmidt GmbH (INCI: Sodium Lactate; Sodium PCA; Glycine; Fructose; Urea; Niacinamide; Inositol; Sodium Benzoate; Lactic Acid) | 0,50% |
| Preservative | q.s. |

### Formulierungsbeispiel 27: Rinse-Off Conditioner

| | |
|---|---|
| Water | 89,20% |
| VARISOFT^{®} EQ 65, Evonik Goldschmidt GmbH (INCI: Distearyl Dimonium Chloride; Cetearyl Alcohol) | 2,00% |
| VARISOFT^{®} BT 85, Evonik Goldschmidt GmbH (INCI: Behentrimonium Chloride) | 2,00% |
| ABIL^{®} OSW 5, Evonik Goldschmidt GmbH (INCI: Cyclopentasiloxane; Dimethiconol) | 1,00% |
| Verbindung Beispiel 1 | 0,80% |
| TEGO^{®} Alkanol 1618, Evonik Goldschmidt GmbH (INCI: Cetearyl Alcohol) | 5,00% |
| Preservative, Perfume | q.s. |

### Formulierungsbeispiel 28: Rinse-Off Conditioner

| | |
|---|---|
| Water | 89,20% |
| VARISOFT^{®} EQ 65, Evonik Goldschmidt GmbH (INCI: Distearyl Dimonium Chloride; Cetearyl Alcohol) | 2,00% |
| VARISOFT^{®} BT 85, Evonik Goldschmidt GmbH (INCI: Behentrimonium Chloride) | 2,00% |
| ABIL^{®} Soft AF 100, Evonik Goldschmidt GmbH (INCI: Methoxy PEG/PPG-7/3 Aminopropyl Dimethicone) | 1,00% |
| Verbindung Beispiel 1 | 0,80% |
| TEGO^{®} Alkanol 1618, Evonik Goldschmidt GmbH (INCI: Cetearyl Alcohol) | 5,00% |
| Preservative, Perfume | q.s. |

### Formulierungsbeispiel 29: Rinse-Off Conditioner

| | |
|---|---|
| Water | 89,20% |
| VARISOFT^{®} EQ 65, Evonik Goldschmidt GmbH (INCI: Distearyl Dimonium Chloride; Cetearyl Alcohol) | 2,00% |
| VARISOFT^{®} BT 85, Evonik Goldschmidt GmbH (INCI: Behentrimonium Chloride) | 2,00% |
| SF 1708, Momentive (INCI: Amodimethicone) | 1,00% |
| Verbindung Beispiel 1 | 0,80% |
| TEGO^{®} Alkanol 1618, Evonik Goldschmidt GmbH (INCI: Cetearyl Alcohol) | 5,00% |
| Preservative, Perfume | q.s. |

### Formulierungsbeispiel 30: Conditioning Shampoo

| | |
|---|---|
| TEXAPON^{®} NSO, Cognis, 28%-ig (INCI: Sodium Laureth Sulfate) | 27,00% |
| Plantacare 818 UP, Cognis, 51,4%-ig (INCI: Coco Glucoside) | 5,00% |
| Verbindung Beispiel 2 | 1,50% |
| Perfume | 0,25% |
| Water | 56,55% |
| TEGO^{®} Cosmo C 100, Evonik Goldschmidt GmbH (INCI: Creatine) | 1,00% |
| Jaguar C-162, Rhodia (INCI: Hydroxypropyl Guar Hydroxypropyltrimonium Chloride) | 0,20% |
| TEGO^{®} Betain F 50, Evonik Goldschmidt GmbH, 38%-ig (INCI: Cocamidopropyl Betaine) | 8,00% |
| NaCl | 0,50% |
| Preservative | q.s. |

### Formulierungsbeispiel 31: Conditioning Shampoo

| | |
|---|---|
| Plantacare 818 UP; Cognis, 51,4%-ig (INCI: Coco Glucoside) | 18,00% |
| Verbindung Beispiel 2 | 1,50% |
| Perfume | 0,25% |
| Water | 70,55% |
| TEGO^{®} Cosmo C 100, Evonik Goldschmidt GmbH (INCI: Creatine) | 1,00% |
| Jaguar C-162, Rhodia (INCI: Hydroxypropyl Guar Hydroxypropyltrimonium Chloride) | 0,20% |
| TEGO^{®} Betain F 50, Evonik Goldschmidt GmbH, 38%-ig (INCI: Cocamidopropyl Betaine) | 8,00% |
| NaCl | 0,50% |
| Preservative | q.s. |

### Formulierungsbeispiel 32: Pearlized Shampoo

| | |
|---|---|
| TEXAPON^{®} NSO, Cognis, 28%-ig | 32,00% |
| (INCI: Sodium Laureth Sulfate) | |
| Verbindung Beispiel 1 | 0,75% |
| Perfume | 0,25% |
| Water | 56,00% |
| TEGO^{®} Betain F 50, Evonik Goldschmidt GmbH, 38%-ig | 8,00% |
| (INCI: Cocamidopropyl Betaine) | |
| TEGIN^{®} D 1102, Evonik Goldschmidt GmbH | 1,00% |
| (INCI: PEG-3 Distearate) | |
| ANTIL^{®} 171, Evonik Goldschmidt GmbH | 1,50% |
| (INCI: PEG-18 Glyceryl Oleate/Cocoate) | |
| NaCl | 0,50% |
| Preservative | q.s. |

### Formulierungsbeispiel 33: "Two in One" Shampoo

| | | |
|---|---|---|
| A | TEXAPON^{®} NSO, Cognis, 28%-ig, (INCI: Sodium Laureth Sulfate) | 30,00% |
| | Perfume | 0,50% |
| | Stepanate^{®} SCS, Stepan, (INCI: Sodium Cumenesulfonate) | 1,00% |
| | Water | 16,25% |
| | TEGO^{®} Betain F 50, Evonik Goldschmidt GmbH, 38%-ig, (INCI: Cocamidopropyl Betaine) | 8,00% |
| B | TEXAPON^{®} NSO, Cognis, 28%-ig, (INCI: Sodium Laureth Sulfate) | 15,00% |
| | Stepanate^{®} SCS, Stepan, (INCI: Sodium Cumenesulfonate) | 1,00% |
| | Water | 5,00% |
| | REWOMID^{®} C 212, Evonik Goldschmidt GmbH, (INCI: Cocamide MEA) | 1,50% |
| | TEGIN^{®} G 1100 Pellets, Evonik Goldschmidt GmbH, (INCI: Glycol Distearate) | 1,50% |
| C | TEXAPON^{®} NSO, Cognis, 28%-ig, (INCI: Sodium Laureth Sulfate) | 15,00% |
| | TEGO^{®} Alkanol 16, Evonik Goldschmidt GmbH, (INCI: Cetyl Alcohol) | 0,50% |
| | Verbindung Beispiel 2 | 1,50% |
| | Dimethicone (10000 mPa·s) | 1,50% |
| | Stepanate^{®} SCS, Stepan, (INCI: Sodium Cumenesulfonate) | 1,00% |
| | Keltrol^{®}, CP Telco, (INCI: Xanthan Gum) | 0,75% |
| | Preservative | q.s. |

### Formulierungsbeispiel 34: Conditioning Anti-Schuppen Shampoo

| | | |
|---|---|---|
| A | TEGIN^{®} G 1100 Pellets, Evonik Goldschmidt GmbH, (INCI: Glycol Distearate) | 3,00% |
| | TEXAPON^{®} NSO, Cognis, 28%-ig, (INCI: Sodium Laureth Sulfate) | 40,00% |
| B | Perfume | 0,30% |
| | Zinc-Pyrion NF, WeylChem, 48%-ig, (INCI: Zinc Pyrithione) | 2,00% |
| | Verbindung Beispiel 2 | 2,00% |
| C | Water | 35,70% |
| | TEGO^{®} Carbomer 341 ER, Evonik Goldschmidt GmbH, (INCI: Acrylates/C10-30 Alkyl Acrylate Crosspolymer) | 0,20% |
| | Water | 0,30% |
| | NaOH, 25%-ig | 0,30% |
| D | REWOTERIC^{®} AM B U 185, Evonik Goldschmidt GmbH, 30%-ig, (INCI: Undecylenamidopropyl Betaine) | 12,50% |
| | ANTIL^{®} SPA 80, Evonik Goldschmidt GmbH, (INCI: Isostearamide MIPA; Glyceryl Laurate) | 3,70% |
| E | Preservative | q.s. |

### Formulierungsbeispiel 35: Haarfärbemittel 1

| | |
|---|---|
| Water demineralized | 57,40% |
| TEGO^{®} Alkanol 1618, Evonik Goldschmidt GmbH, (INCI: Cetearyl Alcohol) | 12,00% |
| Eutanol^{®} G, BASF Cognis, (INCI: Octyldodecanol) | 3,00% |
| REWOMID^{®} C 212, Evonik Goldschmidt GmbH, (INCI: Cocamide MEA) | 1,50% |
| Super Hartolan^{®} B, Croda, (INCI: Lanolin Alcohol) | 3,00% |
| Avocadoöl, Henry Lamotte, (INCI: Persea Gratissima Oil) | 1,50% |
| Pristerene^{®} 4960, Uniquema, (INCI: Stearic Acid) | 6,00% |
| EDTA BD, BASF, (INCI: Disodium EDTA) | 0,10% |
| Texapon^{®} K12G, BASF Cognis, (INCI: Sodium Lauryl Sulfate) | 0,50% |
| Propylenglycol | 5,00% |
| Timica Silver Sparkle, BASF, (INCI: MICA; Titanium Dioxide) | 1,00% |
| Ammoniaklösung, 25%ig | 6,00% |
| 2,5-Diaminotoluolsulfat, (INCI: Toluene-2,5-Diamine) | 1,40% |
| Rodol^{®} RS, Jos. H. Lowenstein & Sons, (INCI: Resorcinol) | 0,30% |
| HC Blue A42, (INCI: 2,4-Diaminophenoxyethanol di HCl) | 0,10% |
| Natriumsulfit | 0,50% |
| Perfume | 0,20% |
| Verbindung Beispiel 1 (erfindungsgemäß) | 0,50% |

### Formulierungsbeispiel 36: Haarfärbemittel 2

| | |
|---|---|
| Water demineralized | 64,00% |
| TEGO^{®} Alkanol 1618, Evonik Goldschmidt GmbH, (INCI: Cetearyl Alcohol) | 12,00% |
| Super Hartolan^{®} B, Croda, (INCI: Lanolin Alcohol) | 2,50% |
| Meadowfoam^{®} Seed Oil, Fanning, (INCI: Limnanthes Alba) | 1,00% |
| Pristerene^{®} 4960, Uniquema, (INCI: Stearic Acid) | 5,50% |
| EDTA BD, BASF, (INCI: Disodium EDTA) | 0,10% |
| Glycerin | 5,00% |
| Texapon^{®} N 70, BASF Cognis, (INCI: Sodium Laureth Sulfate) | 2,00% |
| Monoethanolamin | 4,00% |
| 2,5-Diaminotoluolsulfat, (INCI: Toluene-2,5-Diamine) | 0,90% |
| Rodol^{®} RS, Jos. H. Lowenstein & Sons, (INCI: Resorcinol) | 0,20% |
| Jarocol^{®} 4A3MP, Vivimed Labs, (INCI: 4-Amino-M-Cresol) | 0,60% |
| Rodol^{®} PAOC, Jos. H. Lowenstein & Sons, (INCI: 4-Amino-2-Hydroxytoluene) | 0,50% |
| Uantox^{®} EBATE, Universal Preserv-A-Chem, (INCI: Erythorbic Acid) | 0,50% |
| Perfume | 0,20% |
| Verbindung Beispiel 2 (erfindungsgemäß) | 1,00% |

### Formulierungsbeispiel 37: Haarfärbemittel 3

| | |
|---|---|
| Water demineralized | 67,50% |
| TEGO^{®} Alkanol 1618, Evonik Goldschmidt GmbH, (INCI: Cetearyl Alcohol) | 10,00% |
| Eutanol^{®} G, BASF Cognis, (INCI: Octyldodecanol) | 1,00% |
| REWOMID^{®} C 212, Evonik Goldschmidt GmbH, (INCI: Cocamide MEA) | 2,00% |
| TEGIN^{®} VS, Evonik Goldschmidt GmbH, (INCI: Glyceryl Stearate SE) | 5,00% |
| Fitoderm^{®}, Hispano Quimica S. A., (INCI: Squalane) | 1,00% |
| Coenzyme Q 10 | 0,10% |
| EDTA BD, BASF, (INCI: Disodium EDTA) | 0,10% |
| Texapon^{®} K12G, BASF Cognis, (INCI: Sodium Lauryl Sulfate) | 0,10% |
| Propylenglycol | 5,00% |
| Ammoniaklösung, 25%ig | 3,00% |
| Rodol^{®} ERN, Jos. H. Lowenstein & Sons, (INCI: 1-Naphthol) | 0,30% |
| Imexine^{®} OAG, Chimex, (INCI: 2-Methyl-5-Hydroxyethylaminophenol) | 1,00% |
| Colorex^{®} WP5, Teluca, (INCI: 1-Hydroxyethyl 4,5-Diamino Pyrazole Sulfate) | 2,60% |
| Ascorbinsäure | 0,30% |
| Perfume | 0,30% |
| Verbindung Beispiel 1 (erfindungsgemäß) | 0,70% |

### Formulierungsbeispiel 38: Haarfärbemittel 4

| | |
|---|---|
| Water demineralized | 60,70% |
| TEGO^{®} Alkanol 1618, Evonik Goldschmidt GmbH, (INCI: Cetearyl Alcohol) | 13,00% |
| REWOMID^{®} C 212, Evonik Goldschmidt GmbH, (INCI: Cocamide MEA) | 2,00% |
| Super Hartolan^{®} B, Croda, (INCI: Lanolin Alcohol) | 2,50% |
| Avocadoöl, Henry Lamotte, (INCI: Persea Gratissima Oil) | 2,00% |
| Pristerene^{®} 4960, Uniquema, (INCI: Stearic Acid) | 6,00% |
| EDTA BD, BASF, (INCI: Disodium EDTA) | 0,10% |
| Texapon^{®} K12G, BASF Cognis, (INCI: Sodium Lauryl Sulfate) | 0,10% |
| Propylenglycol | 5,00% |
| Ammoniaklösung, 25%ig | 6,00% |
| 2,5-Diaminotoluolsulfat, (INCI: Toluene-2,5-Diamine) | 1,30% |
| Rodol^{®} RS, Jos. H. Lowenstein & Sons, (INCI: Resorcinol) | 0,30% |
| Covastyle^{®} TBQ, LCW Les colorants Wackherr S.A., (t-Butyl Hydroquinone) | 0,30% |
| Perfume | 0,20% |
| Verbindung Beispiel 2 (erfindungsgemäß) | 0,50% |

### Formulierungsbeispiel 39: 2 in 1 Shampoo 2

| | |
|---|---|
| TEXAPON^{®} NSO, Cognis, 28%-ig (INCI: Sodium Laureth Sulfate) | 32,00% |
| VARISOFT^{®} PATC, Evonik Goldschmidt GmbH (INCI: Palmitamidopropyltrimonium Chloride) | 1,50% |
| REWODERM^{®} LI S 80, Evonik Goldschmidt GmbH (INCI: PEG-200 Hydrogenated Glyceryl Palmate; PEG-7 Glyceryl Cocoate) | 2,00% |
| Verbindung Beispiel 9 | 0,50% |
| Verbindung Beispiel 10 | 0,50% |
| Perfume | 0,25% |
| Water | 54,05% |
| TEGO^{®} Cosmo C 100, Evonik Goldschmidt GmbH (INCI: Creatine) | 0,50% |
| Jaguar C-162, Rhodia (INCI: Hydroxypropyl Guar Hydroxypropyltrimonium Chloride) | 0,20% |
| TEGO^{®} Betain F 50, Evonik Goldschmidt GmbH, 38%-ig (INCI: Cocamidopropyl Betaine) | 8,00% |
| NaCl | 0,50% |
| Preservative | q.s. |

### Formulierungsbeispiel 40: Rinse-Off Conditioner 2

| | |
|---|---|
| Water | 90,20% |
| VARISOFT^{®} EQ 65, Evonik Goldschmidt GmbH (INCI: Distearyl Dimonium Chloride; Cetearyl Alcohol) | 2,00% |
| VARISOFT^{®} BT 85, Evonik Goldschmidt GmbH (INCI: Behentrimonium Chloride) | 2,00% |
| Verbindung Beispiel 11 | 0,80% |
| TEGO^{®} Alkanol 1618, Evonik Goldschmidt GmbH (INCI: Cetearyl Alcohol) | 5,00% |
| Preservative, Perfume | q.s. |

### Formulierungsbeispiel 41: Leave-In Conditioner Spray 2

| | |
|---|---|
| TAGAT^{®} CH-40, Evonik Goldschmidt GmbH | 2,00% |
| (INCI: PEG-40 Hydrogenated Castor Oil) | |
| Ceramide VI, Evonik Goldschmidt GmbH | 0,05% |
| (INCI: Ceramide 6 II) | |
| Perfume | 0,20% |
| Water | 90,95% |
| Verbindung Beispiel 9 | 0,50% |
| LACTIL^{®}, Evonik Goldschmidt GmbH | 2,00% |
| (INCI: Sodium Lactate; Sodium PCA; Glycine; Fructose; Urea; Niacinamide; Inositol; Sodium Benzoate; LacticAcid) | |
| TEGO^{®} Betain F 50, Evonik Goldschmidt GmbH, 38%-ig | 2,30% |
| (INCI: Cocamidopropyl Betaine) | |
| Citric Acid (10% in water) | 2,00% |

### Formulierungsbeispiel 42: Schaumiges Körperpflegemittel 2

| | |
|---|---|
| TEXAPON^{®} NSO, Cognis, 28%-ig | 14,30% |
| (INCI: Sodium Laureth Sulfate) | |
| Perfume | 0,30% |
| Verbindung Beispiel 10 | 1,00% |
| REWOTERIC^{®} AM C, Evonik Goldschmidt GmbH, 32%-ig | 8,00% |
| (INCI: Sodium Cocoamphoacetate) | |
| Water | 74,60% |
| Polyquaternium-7 | 0,30% |
| LACTIL^{®}, Evonik Goldschmidt GmbH | 1,00% |
| (INCI: Sodium Lactate; Sodium PCA; Glycine; Fructose; Urea; Niacinamide; Inositol; Sodium Benzoate; Lactic Acid) | |
| Citric Acid Monohydrate | 0,50% |

### Formulierungsbeispiel 43: Conditioning Shampoo 2

| | |
|---|---|
| TEXAPON^{®} NSO, Cognis, 28%-ig | 27,00% |
| (INCI: Sodium Laureth Sulfate) | |
| Plantacare 818 UP, Cognis, 51,4%-ig | 5,00% |
| (INCI: Coco Glucoside) | |
| Verbindung Beispiel 11 | 1,50% |
| Perfume | 0,25% |
| Water | 56,55% |
| TEGO^{®} Cosmo C 100, Evonik Goldschmidt GmbH | 1,00% |
| (INCI: Creatine) | |
| Jaguar C-162, Rhodia | 0,20% |
| (INCI: Hydroxypropyl Guar Hydroxypropyltrimonium Chloride) | |
| TEGO^{®} Betain F 50, Evonik Goldschmidt GmbH, 38%-ig | 8,00% |
| (INCI: Cocamidopropyl Betaine) | |
| NaCl | 0,50% |
| Preservative | q.s. |

### Formulierungsbeispiel 44: Conditioning Anti-Schuppen Shampoo 2

| | | |
|---|---|---|
| A | TEGIN^{®} G 1100 Pellets, Evonik Goldschmidt GmbH, (INCI: Glycol Distearate) | 3,00% |
| | TEXAPON^{®} NSO, Cognis, 28%-ig, (INCI: Sodium Laureth Sulfate) | 40,00% |
| B | Perfume | 0,30% |
| | Zinc-Pyrion NF, WeylChem, 48%-ig, (INCI: Zinc Pyrithione) | 2,00% |
| | Verbindung Beispiel 9 | 2,00% |
| C | Water | 35,70% |
| | TEGO^{®} Carbomer 341 ER, Evonik Goldschmidt GmbH, (INCI: Acrylates/C10-30 Alkyl Acrylate Crosspolymer) | 0,20% |
| | Water | 0,30% |
| | NaOH, 25%-ig | 0,30% |
| D | REWOTERIC^{®} AM B U 185, Evonik Goldschmidt GmbH, 30%-ig, (INCI: Undecylenamidopropyl Betaine) | 12,50% |
| | ANTIL^{®} SPA 80, Evonik Goldschmidt GmbH, (INCI: Isostearamide MIPA; Glyceryl Laurate) | 3,70% |
| E | Preservative | q.s. |

### Formulierungsbeispiel 45: Haarfärbemittel 5

| | |
|---|---|
| Water demineralized | 57,40% |
| TEGO^{®} Alkanol 1618, Evonik Goldschmidt GmbH, (INCI: Cetearyl Alcohol) | 12,00% |
| Eutanol^{®} G, BASF Cognis, (INCI: Octyldodecanol) | 3,00% |
| REWOMID^{®} C 212, Evonik Goldschmidt GmbH, (INCI: Cocamide MEA) | 1,50% |
| Super Hartolan^{®} B, Croda, (INCI: Lanolin Alcohol) | 3,00% |
| Avocadoöl, Henry Lamotte, (INCI: Persea Gratissima Oil) | 1,50% |
| Pristerene^{®} 4960, Uniquema, (INCI: Stearic Acid) | 6,00% |
| EDTA BD, BASF, (INCI: Disodium EDTA) | 0,10% |
| Texapon^{®} K12G, BASF Cognis, (INCI: Sodium Lauryl Sulfate) | 0,50% |
| Propylenglycol | 5,00% |
| Timica Silver Sparkle, BASF, (INCI: MICA; Titanium Dioxide) | 1,00% |
| Ammoniaklösung, 25%ig | 6,00% |
| 2,5-Diaminotoluolsulfat, (INCI: Toluene-2,5-Diamine) | 1,40% |
| Rodol^{®} RS, Jos. H. Lowenstein & Sons, (INCI: Resorcinol) | 0,30% |
| HC Blue A42, (INCI: 2,4-Diaminophenoxyethanol di HCl) | 0,10% |
| Natriumsulfit | 0,50% |
| Perfume | 0,20% |
| Verbindung Beispiel 11 | 0,50% |

## Patentansprüche

1. Verfahren zur Herstellung von mindestens eine Betaingruppe enthaltenden Polysiloxanen umfassend die Verfahrensschritte:
A) Anlagerung von Organopolysiloxanen der allgemeinen Formel I 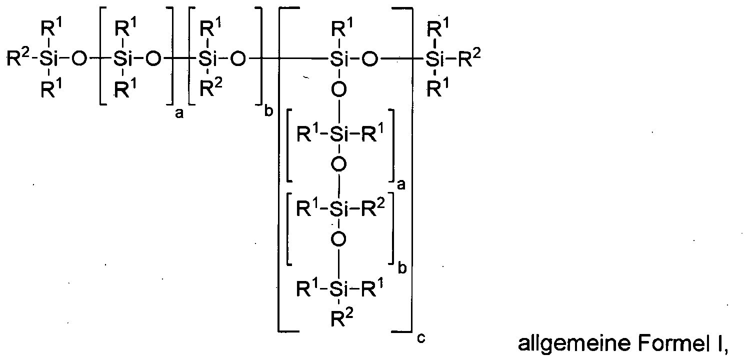 worin
R¹ unabhängig voneinander gleiche oder verschiedene, verzweigte oder unverzweigte, aliphatische oder aromatische Kohlenwasserstoffreste mit 1 bis 20 C-Atomen, bevorzugt unverzweigte, aliphatische oder aromatische Kohlenwasserstoffreste mit 1 bis 9 C-Atomen und besonders bevorzugt Methyl, Ethyl oder Phenyl,
R² unabhängig voneinander gleich oder verschiedene Reste R¹ oder H, mit der Maßgabe, dass mindestens drei Reste R² gleich H sind,
a 5 bis 500, bevorzugt 10 bis 250, insbesondere 15 bis 75,
b 1 bis 50, bevorzugt 1 bis 20, insbesondere 3 bis 15,
c 0 bis 10, bevorzugt 0 bis 5, insbesondere 0,
bedeuten,
an Vinylsiloxane der allgemeinen Formel II, 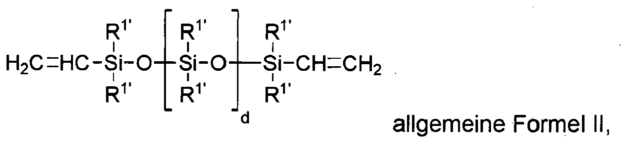 mit
R^{1'} unabhängig voneinander gleiche oder verschiedene, verzweigte oder unverzweigte, aliphatische oder aromatische Kohlenwasserstoffreste mit 1 bis 20 C-Atomen, bevorzugt unverzweigte, aliphatische oder aromatische Kohlenwasserstoffreste mit 1 bis 9 C-Atomen und besonders bevorzugt Methyl, Ethyl oder Phenyl,
d 10 bis 1.000, bevorzugt 101 bis 750, insbesondere 201 bis 500,
in Gegenwart von Platin- oder Rhodiumkatalysatoren,
mit der Maßgabe, dass die Organopolysiloxane der allgemeinen Formel I in mindestens 6-fachem und höchstens 40-fachem molaren Überschuss bezogen auf das Vinylsiloxan der allgemeinen Formel II vorliegen,
unter Erhalt eines SiH-Gruppen aufweisenden Reaktionsproduktes und weiterer Umsetzung des Reaktionsproduktes durch Verfahrensschritt B);
B) Übergangsmetall-katalysierte, teilweise oder vollständige Addition der SiH-Gruppen der Produkte aus Verfahrensschritt A) an mindestens eine, mindestens eine Epoxygruppe aufweisende Verbindung ausgewählt aus Alkenyl- und Alkinylverbindungen, insbesondere Alkenylverbindungen, ausgewählt aus der Gruppe bestehend aus 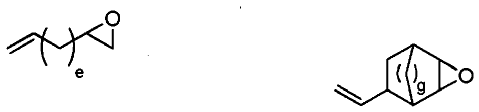 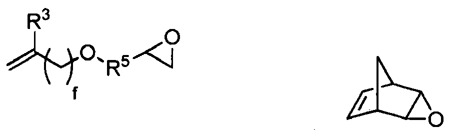 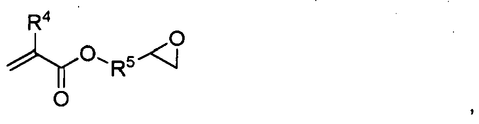 mit
R³ Wasserstoff oder Alkyl mit 1 bis 6 C-Atomen, bevorzugt Wasserstoff,
R⁴ Wasserstoff oder Alkyl mit 1 bis 6 C-Atomen, bevorzugt Methyl,
R⁵ unabhängig voneinander gleiche oder verschiedene zweiwertige Kohlenwasserstoffreste, die gegebenenfalls Etherfunktionen enthalten, bevorzugt Methylen,
e 0 bis 30, bevorzugt 0 bis 12, insbesondere 0 bis 6,
f 0 bis 18, bevorzugt 0 bis 6, insbesondere 1,
g 0 bis 2, bevorzugt 0 bis 1, insbesondere 0,
insbesondere eine Addition an Allylglycidylether;
C) gegebenenfalls zusätzliche, übergangsmetall-katalysierte, teilweise oder vollständige Addition der verbleibenden SiH-Gruppen der Produkte aus Verfahrensschritt A) an mindestens eine Verbindung ausgewählt aus Alkenyl- und Alkinylverbindungen, wie beispielsweise α-Olefine oder Doppelbindungen enthaltende Polyether, insbesondere ausgewählt aus der Gruppe bestehend aus 1-Dodecen, 1-Hexadecen, 1-Octadecen und Allylpolyether der allgemeinen Formel III 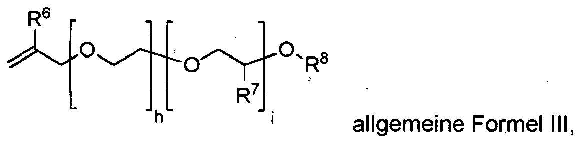 mit
R⁶ Wasserstoff oder Alkyl mit 1 bis 6 C-Atomen, bevorzugt Wasserstoff oder Methyl, insbesondere Wasserstoff,
R⁷ unabhängig voneinander gleiche oder verschiedene Alkyl-, Aryl-oder Alkarylreste mit 1 bis 30 C-Atomen, die gegebenenfalls Etherfunktionen enthalten, bevorzugt Methyl, Ethyl oder Phenyl, insbesondere Methyl,
R⁸ Alkylrest mit 1 bis 18 C-Atomen, ein Acetatrest oder Wasserstoff, bevorzugt Alkylrest mit 1 bis 18 C-Atomen, ein Acetatrest und insbesondere Methyl,
h 0 bis 100, bevorzugt 1 bis 50, insbesondere 1 bis 30,
i 0 bis 100, bevorzugt 1 bis 50, insbesondere 1 bis 30;
D) teilweise oder vollständige Umsetzung der nach den Verfahrensschritten A), B) und gegebenenfalls C) erhaltenen Epoxysiloxane in Verfahrensschritt d1) und/oder d2):
d1) mit mindestens einem Aminosäure-Derivat der allgemeinen Formel IV 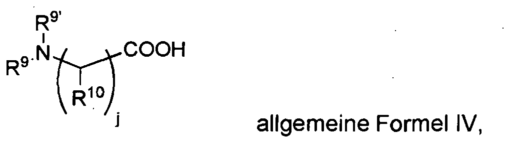 mit
R⁹ Alkylrest mit 1 bis 6 C-Atomen, bevorzugt Methyl,
R^{9'} Alkylrest mit 1 bis 6 C-Atomen, bevorzugt Methyl,
R¹⁰ unabhängig voneinander gleiche oder verschiedene, verzweigte oder unverzweigte, aliphatische oder aromatische Kohlenwasserstoffreste mit 1 bis 20 C-Atomen, die gegebenenfalls Ether-, Thiol-, Thioether- oder Hydroxyfunktionen enthalten, oder Wasserstoff, bevorzugt Wasserstoff,
j 1 bis 10, bevorzugt 1 bis 3, insbesondere 1,
zu Betaingruppen-modifizierten Siloxanen;
d2) mit mindestens einer sekundären oder tertiären Amino-Verbindung ausgewählt aus der Gruppe der allgemeinen Formeln V, VI und VII, 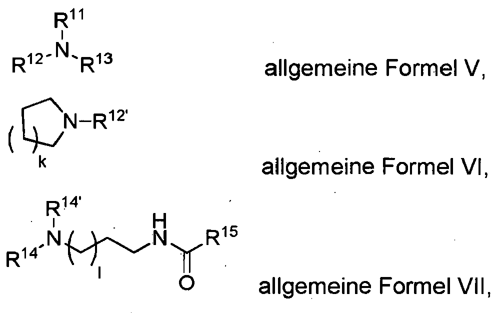 mit
R¹¹ Alkylreste mit 1 bis 6 C-Atomen, bevorzugt Methyl,
R¹² Wasserstoff oder Alkyl mit 1 bis 6 C-Atomen, bevorzugt Wasserstoff oder Methyl,
R¹³ Alkyl-, Aryl- oder Alkarylrest mit 1 bis 30 C-Atomen der gegebenenfalls Etherfunktionen enthält,
R^{12'} Wasserstoff oder Alkyl mit 1 bis 6 C-Atomen, bevorzugt Wasserstoff oder Methyl,
k 0 bis 4, bevorzugt 1 bis 2, insbesondere 1,
R¹⁴ Ethyl oder Methyl, bevorzugt Methyl,
R^{14'} Ethyl oder Methyl, bevorzugt Methyl,
R¹⁵ gegebenenfalls verzweigter, gesättigter oder ungesättigter Alkylrest mit 1 bis 30 C-Atomen, der gegebenenfalls Ether- oder Hydroxylfunktionen enthält, bevorzugt linearer gesättigter Alkylrest mit 8 bis 22 C-Atomen,
l 0 bis 4, bevorzugt 1,
mit der Maßgabe, dass im Falle von Formel VII oder im Falle von tertiären Aminen der allgemeinen Formeln V oder VI (d.h. R¹² bzw. R^{12'} ≠ H) equimolar bezüglich dieses tertiären Amins eine Säure H⁺X⁻ zugesetzt wird,
mit
X⁻ gleiche oder verschiedene Gegenionen zu den positiven Ladungen an den gebildeten quaternären Ammoniumgruppen, ausgewählt aus anorganischen oder organischen Anionen der Säuren HX, bevorzugt Acetat, Lactat, Ethylsulfat, Methylsulfat, Toluolsulfonat, Bromid oder Chlorid,
zu tertiären Amino- bzw. quaternären Ammoniumgruppenmodifizierten Siloxanen, und;
E) gegebenenfalls im Falle des Einsatzes von sekundären Aminen in Verfahrensschritt d2), d.h. R¹² bzw. R^{12'}= H,
Umsetzung der entstandenen tertiären Aminogruppen mit
[Y(CH₂)ₘCOO]_{1/n}Z allgemeine Formel VIII,
mit
Y⁻ Ethylsulfat, Methylsulfat, Toluolsulfonat, Bromid oder Chlorid,
Zⁿ⁺ Alkali- oder Erdalkalikationen, bevorzugt Na⁺ oder K⁺ und
m 1 bis 6, bevorzugt 1 oder 2, insbesondere 1,
zu Betaingruppen.

2. Verfahren gemäß Anspruch 1, **dadurch gekennzeichnet, dass** mindestens ein Lösungsmittel, insbesondere Toluol, Cyclohexan und/oder Isopropanol, eingesetzt wird.

3. Verfahren gemäß Anspruch 1 oder 2, **dadurch gekennzeichnet, dass** in den Verfahrensschritten A), B) und/oder gegebenenfalls C) mindestens ein Edelmetallkatalysator, insbesondere ein Pt oder Rh-haltiger Katalysator, eingesetzt wird.

4. Verfahren gemäß mindestens einem der vorherigen Ansprüche, **dadurch gekennzeichnet, dass** in Verfahrensschritt C) die Alkenyl-/Alkinylverbindung ausgewählt ist aus der Gruppe bestehend aus Polyether mit Mehrfachbindungen, allylfunktionelle Polyether, Olefine, Ethen, Ethin, Propen, 1-Buten, 1-Hexen, 1-Dodecen, 1-Hexadecen, Allylalkohol, 1-Hexenol, Styrol, Eugenol, Allylphenol und Undecylensäuremethylester, insbesondere allylfunktionelle Polyether.

5. Mindestens eine Betaingruppe enthaltendes Polysiloxan erhältlich nach einem Verfahren nach mindestens einem der vorherigen Ansprüche.

6. Verwendung mindestens eines Polysiloxans erhältlich nach einem Verfahren gemäß mindestens einem der Ansprüche 1 bis 4 oder eines Polysiloxans gemäß Anspruch 5 zur Herstellung von kosmetischen, pharmazeutischen oder dermatologischen Kompositionen.

7. Verwendung mindestens eines Polysiloxans erhältlich nach einem Verfahren gemäß mindestens einem der Ansprüche 1 bis 4 oder eines Polysiloxans gemäß Anspruch 5 als Pflegewirkstoff in Pflege- und Reinigungsformulierungen.

8. Verwendung mindestens eines Polysiloxans erhältlich nach einem Verfahren gemäß mindestens einem der Ansprüche 1 bis 4 oder eines Polysiloxans gemäß Anspruch 5 als Konditioniermittel für Haarbehandlungsmittel und Haarnachbehandlungsmittel sowie als Mittel zur Verbesserung der Haarstruktur.

9. Kosmetische, pharmazeutische oder dermatologische Formulierung, bevorzugt kosmetische Pflege- und Reinigungsformulierung, insbesondere tensidhaltige wässrige Pflege- und Reinigungsformulierung, enthaltend mindestens ein Polysiloxan erhältlich nach einem Verfahren gemäß mindestens einem der Ansprüche 1 bis 4 oder mindestens ein Polysiloxan gemäß Anspruch 5.

10. Reinigungs- und Pflegeformulierung für Haushalt, industrielle und institutionelle Anwendungen, insbesondere Weichspülmittel, enthaltend mindestens ein Polysiloxan erhältlich nach einem Verfahren gemäß mindestens einem der Ansprüche 1 bis 4 oder mindestens ein Polysiloxan gemäß Anspruch 5.

## Claims

1. Method for producing polysiloxanes containing at least one betaine group, comprising the following method steps:
A) Addition of organopolysiloxanes of general formula I 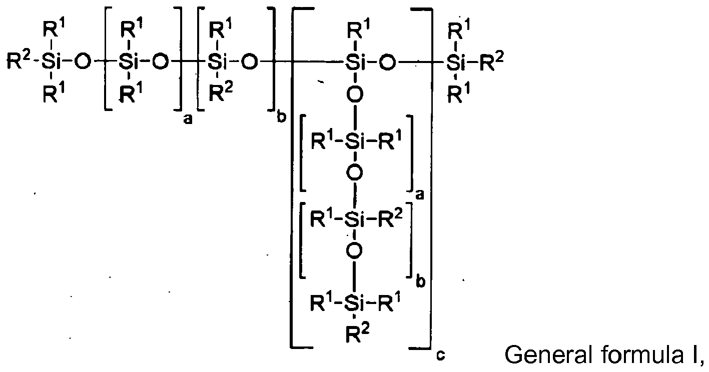 where
R¹ means branched or unbranched, aliphatic or aromatic hydrocarbon radicals containing 1 to 20 C atoms, which are independently the same or different, preferably unbranched aliphatic or aromatic hydrocarbon radicals containing 1 to 9 C atoms, and particularly preferably methyl, ethyl, or phenyl,
R² means radicals R¹ which are independently the same or different, or H, with the condition that at least three radicals R² are H,
a means 5 to 500, preferably 10 to 250, in particular 15 to 75,
b means 1 to 50, preferably 1 to 20, in particular 3 to 15,
c means 0 to 10, preferably 0 to 5, in particular 0,
to vinyl siloxanes of general formula II, 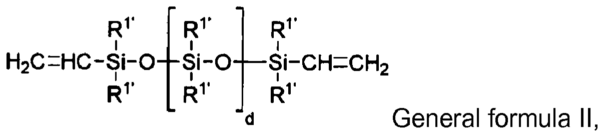 where
R^{1'} means branched or unbranched, aliphatic or aromatic hydrocarbon radicals containing 1 to 20 C atoms, which are independently the same or different, preferably unbranched aliphatic or aromatic hydrocarbon radicals containing 1 to 9 C atoms, and particularly preferably methyl, ethyl, or phenyl,
d means 10 to 1,000, preferably 101 to 750, in particular 201 to 500,
in the presence of platinum or rhodium catalysts,
with the condition that the organopolysiloxanes of general formula I are present in at least a 6-fold and no greater than a 40-fold molar excess, based on the vinyl siloxane of general formula II, to obtain a reaction product containing SiH groups, and further reaction of the reaction product using method step B);
B) Transition metal-catalyzed, partial, or complete addition of the SiH groups of the products from method step A) to at least one compound which contains at least one epoxy group and which is selected from alkenyl and alkynyl compounds, in particular alkenyl compounds selected from the group comprising 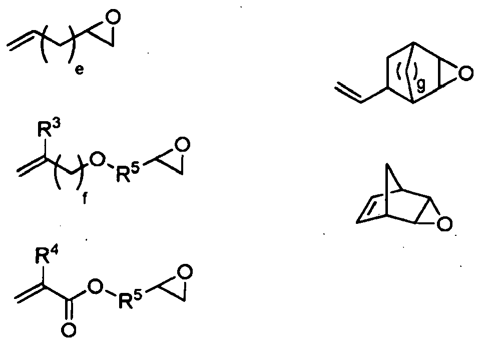 where
R³ means hydrogen or alkyl containing 1 to 6 C atoms, preferably hydrogen,
R⁴ means hydrogen or alkyl containing 1 to 6 C atoms, preferably methyl,
R⁵ means bivalent hydrocarbon radicals which are independently the same or different, and which optionally contain ether functions, preferably methylene,
e means 0 to 30, preferably 0 to 12, in particular 0 to 6,
f means 0 to 18, preferably 0 to 6, in particular 1,
g means 0 to 2, preferably 0 to 1, in particular 0,
in particular an addition to allyl glycidyl ether;
C) Optionally, additional transition metal-catalyzed, partial, or complete addition of the remaining SiH groups of the products from method step A) to at least one compound selected from alkenyl and alkynyl compounds, such as α-olefins or polyethers containing double bonds, in particular selected from the group comprising 1-dodecene, 1-hexadecene, 1-octadecene, and allyl polyethers of general formula III 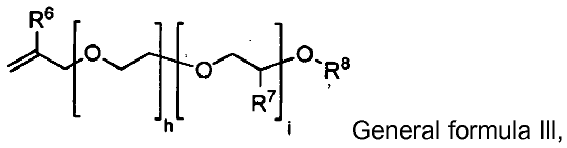 where
R⁶ means hydrogen or alkyl containing 1 to 6 C atoms, preferably hydrogen or methyl, in particular hydrogen,
R⁷ means alkyl, aryl, or alkaryl radicals containing 1 to 30 C atoms, which are independently the same or different, and which optionally contain ether functions, preferably methyl, ethyl, or phenyl, in particular methyl,
R⁸ means an alkyl radical containing 1 to 18 C atoms, an acetate radical, or hydrogen, preferably an alkyl radical containing 1 to 18 C atoms, an acetate radical, and in particular methyl,
h means 0 to 100, preferably 1 to 50, in particular 1 to 30,
i means 0 to 100, preferably 1 to 50, in particular 1 to 30;
D) Partial or complete reaction of the epoxy siloxanes obtained according to method steps A), B), and optionally C), in method step d1) and/or d2):
d1) with at least one amino acid derivative of general formula IV 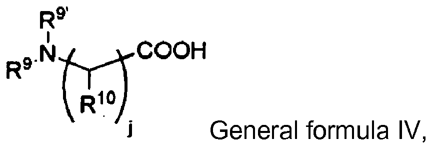 where
R⁹ means an alkyl radical containing 1 to 6 C atoms, preferably methyl,
R^{9'} means an alkyl radical containing 1 to 6 C atoms, preferably methyl,
R¹⁰ means branched or unbranched, aliphatic or aromatic hydrocarbon radicals which are independently the same or different and which contain 1 to 20 C atoms, and which optionally contain ether, thiol, thioether, or hydroxy functions, or hydrogen, preferably hydrogen,
j means 1 to 10, preferably 1 to 3, in particular 1,
to obtain betaine group-modified siloxanes;
d2) with at least one secondary or tertiary amino compound selected from the group of general formulas V, VI, and VII, 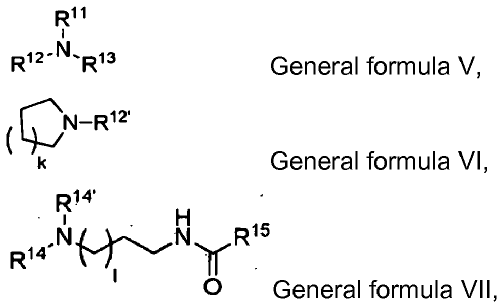 where
R¹¹ means alkyl radicals containing 1 to 6 C atoms, preferably methyl,
R¹² means hydrogen or alkyl containing 1 to 6 C atoms, preferably hydrogen or methyl,
R¹³ means an alkyl, aryl, or alkaryl radical containing 1 to 30 C atoms, and which optionally contains ether functions,
R^{12'} means hydrogen or alkyl containing 1 to 6 C atoms, preferably hydrogen or methyl,
k means 0 to 4, preferably 1 to 2, in particular 1,
R¹⁴ means ethyl or methyl, preferably methyl,
R^{14'} means ethyl or methyl, preferably methyl,
R¹⁵ means an optionally branched, saturated or unsaturated alkyl radical containing 1 to 30 C atoms, which optionally contains ether or hydroxyl functions, preferably a linear saturated alkyl radical containing 8 to 22 C atoms,
l means 0 to 4, preferably 1,
with the condition that in the case of formula VII or in the case of tertiary amines of general formulas V or VI (i.e., R¹² or R^{12'} ≠ H), an acid H⁺X⁻ is added on an equimolar basis with respect to this tertiary amine,
where
X⁻ means counterions, which are the same or different, to the positive charges on the quaternary ammonium groups that are formed, selected from inorganic or organic anions of the acids HX, preferably acetate, lactate, ethyl sulfate, methyl sulfate, toluene sulfonate, bromide, or chloride,
to obtain siloxanes modified with tertiary amino or quaternary ammonium groups, and
E) Optionally in the case of the use of secondary amines in method step d2), i.e., R¹² or R^{12'} = H,
reaction of the resulting tertiary amino groups with
[Y(CH₂)ₘCOO]_{1/n}Z General formula VIII,
where
Y' means ethyl sulfate, methyl sulfate, toluene sulfonate, bromide, or chloride,
Zⁿ⁺ means alkali or alkaline earth cations, preferably Na⁺ or K⁺, and
m means 1 to 6, preferably 1 or 2, in particular 1,
to obtain betaine groups.

2. Method according to Claim 1, **characterized in that** at least one solvent, in particular toluene, cyclohexane, and/or isopropanol, is used.

3. Method according to Claim 1 or 2, **characterized in that** in at least one noble metal catalyst, in particular a catalyst containing Pt or Rh, is used in method steps A), B), and/or optionally C).

4. Method according to at least one of the preceding claims, **characterized in that** in method step C) the alkenyl/alkynyl compound is selected from the group comprising polyethers having multiple bonds, allyl-functional polyethers, olefins, ethene, ethyne, propene, 1-butene, 1-hexene, 1-dodecene, 1-hexadecene, allyl alcohol, 1-hexenol, styrene, eugenol, allyl phenol, and undecylenic acid methyl ester, in particular allyl-functional polyethers.

5. Polysiloxane which contains at least one betaine group and which is obtainable by a method according to at least one of the preceding claims.

6. Use of at least one polysiloxane which is obtainable by a method according to at least one of Claims 1 through 4, or use of a polysiloxane according to Claim 5, for producing cosmetic, pharmaceutical, or dermatological compositions.

7. Use of at least one polysiloxane which is obtainable by a method according to at least one of Claims 1 through 4, or use of a polysiloxane according to Claim 5, as a care active ingredient in care and cleaning formulations.

8. Use of at least one polysiloxane which is obtainable by a method according to at least one of Claims 1 through 4, or use of a polysiloxane according to Claim 5, as a conditioning agent for hair treatment products and hair aftertreatment products, and as agents for improving the structure of the hair.

9. Cosmetic, pharmaceutical, or dermatological formulation, preferably a cosmetic care and cleaning formulation, in particular an aqueous, surfactant-containing care and cleaning formulation, containing at least one polysiloxane which is obtainable by a method according to at least one of Claims 1 through 4, or at least one polysiloxane according to Claim 5.

10. Cleaning and care formulation for household, industrial, and institutional applications, in particular fabric softener, containing at least one polysiloxane which is obtainable by a method according to at least one of Claims 1 through 4, or at least one polysiloxane according to Claim 5.

## Revendications

1. Procédé de production de polysiloxanes contenant au moins un groupe bétaïne, ledit procédé comprenant les étapes de procédé suivantes :
A) adjonction d'organopolysiloxanes de la formule générale I 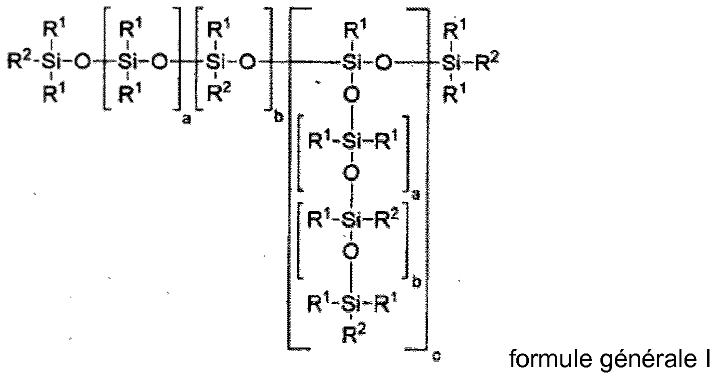 où
R¹ représente indépendamment des groupes hydrocarbonés identiques ou différents, ramifiés ou non ramifiés, aliphatiques ou aromatiques, possédant 1 à 20 atomes de carbone, de préférence des groupes hydrocarbonés non ramifiés, aliphatiques ou aromatiques possédant 1 à 9 atomes de carbone, et de façon particulièrement préférée un groupe méthyle, éthyle ou phényle,
R² représente indépendamment des radicaux R1 ou H, identiques ou différents, avec la condition qu'au moins trois radicaux R² sont H, a désigne un nombre de 5 à 500, de préférence de 10 à 250, en particulier de 15 à 75,
b désigne un nombre de 1 à 50, de préférence de 1 à 20, en particulier de 3 à 15,
c désigne un nombre de 0 à 10, de préférence de 0 à 5, en particulier 0,
à des vinylsiloxanes de la formule générale II, 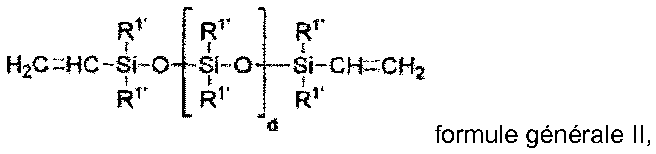 où
R^{1'} représente indépendamment des groupes hydrocarbonés identiques ou différents, ramifiés ou non ramifiés, aliphatiques ou aromatiques, possédant 1 à 20 atomes de carbone, de préférence des groupes hydrocarbonés non ramifiés, aliphatiques ou aromatiques, possédant 1 à 9 atomes de carbone et de manière particulièrement préférée un groupe méthyle, éthyle ou phényle,
d désigne un nombre de 10 à 1000, de préférence de 101 à 750, en particulier de 201 à 500,
en présence de catalyseurs au platine ou au rhodium,
avec la condition que les organopolysiloxanes de la formule générale I soient présents dans un excès molaire de six fois au moins et de 40 fois au plus par rapport au vinylsiloxane de la formule générale II pour obtenir un produit de réaction contenant des groupes SiH et pour transformer ensuite le produit de réaction à l'étape de procédé B) ;
B) addition partielle ou complète, catalysée par un métal de transition, des groupes SiH des produits obtenus à l'étape A) à au moins un composé, comportant au moins un groupe époxy, choisi parmi les composés alcényle et alcynyle, en particulier les composés alcényle, choisi dans le groupe constitué par 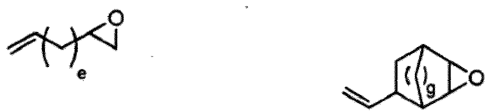 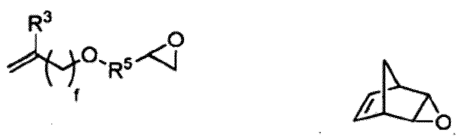 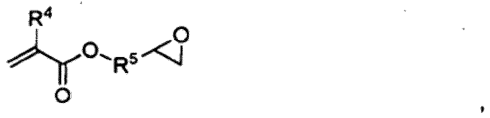 où
R³ représente un atome d'hydrogène ou un groupe alkyle possédant 1 à 6 atomes de carbone, de préférence un atome d'hydrogène,
R⁴ représente un atome d'hydrogène ou un groupe alkyle possédant 1 à 6 atomes de carbone, de préférence un groupe méthyle,
R⁵ représente indépendamment des groupes hydrocarbonés divalents, identiques ou différents, qui contiennent éventuellement des fonctions éther, de préférence un groupe méthylène,
e désigne un nombre de 0 à 30, de préférence de 0 à 12, en particulier de 0 à 6,
f désigne un nombre de 0 à 18, de préférence de 0 à 6, en particulier 1,
g désigne un nombre de 0 à 2, de préférence de 0 à 1, en particulier 0,
en particulier une addition à de l'éther allylglycidique ;
C) éventuellement addition supplémentaire, partielle ou complète, catalysée par un métal de transition, des groupes SiH restants des produits obtenus à l'étape A) à au moins un composé choisi parmi les composés alcényle et alcynyle tels que des α-oléfines ou des polyéthers contenant des doubles liaisons, choisis en particulier dans le groupe constitué par le 1-dodécène, le 1-hexadécène, le 1-octadécène et le polyéther d'allyle de la formule générale III 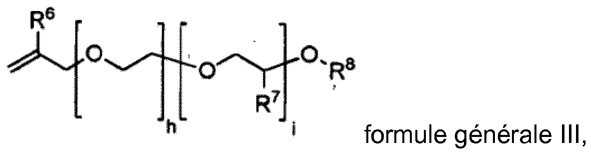 où
R⁶ représente un atome d'hydrogène ou un groupe alkyle possédant 1 à 6 atomes de carbone, de préférence un atome d'hydrogène ou un groupe méthyle, en particulier un atome d'hydrogène,
R⁷ représente indépendamment des groupes alkyle, aryle ou alkaryle, identiques ou différents, possédant 1 à 30 atomes de carbone, qui contiennent éventuellement des fonctions éther, de préférence un groupe méthyle, éthyle ou phényle, en particulier un groupe méthyle,
R⁸ désigne un groupe alkyle possédant 1 à 18 atomes de carbone, un groupe acétate, ou un atome d'hydrogène, de préférence un groupe alkyle possédant 1 à 18 atomes de carbone, un groupe acétate et en particulier un groupe méthyle,
h désigne un nombre de 0 à 100, de préférence de 1 à 50, en particulier de 1 à 30,
i désigne un nombre de 0 à 100, de préférence de 1 à 50, notamment de 1 à 30 ;
D) transformation partielle ou complète des époxysiloxanes, obtenus aux étapes de procédé A), B) et éventuellement C), à étape de procédé d1) et/ou d2) :
d1) avec au moins un dérivé d'acide aminé de la formule générale IV 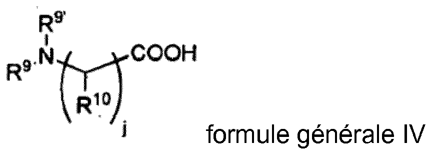 où
R⁹ représente un groupe alkyle possédant 1 à 6 atomes de carbone, de préférence un groupe méthyle,
R^{9'} représente un groupe alkyle possédant 1 à 6 atomes de carbone, de préférence un groupe méthyle,
R¹⁰ représente indépendamment des groupes hydrocarbonés, identiques ou différents, ramifiés ou non ramifiés, aliphatiques ou aromatiques, possédant 1 à 20 atomes de carbone, qui contiennent éventuellement des fonctions éther, thiol, thioéther ou hydroxy, ou un atome d'hydrogène, de préférence un atome d'hydrogène,
j désigne un nombre de 1 à 10, de préférence de 1 à 3, en particulier 1,
pour donner des siloxanes modifiés par des groupes de bétaïne ;
d2) avec au moins un composé amine secondaire ou tertiaire choisi dans le groupe des formules générales V, VI et VII, 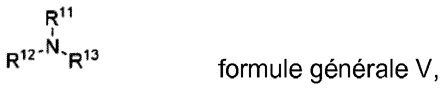 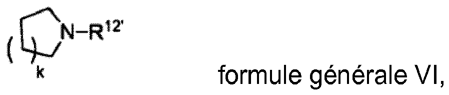 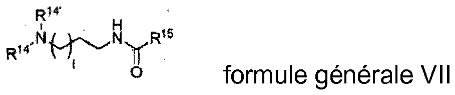 où
R¹¹ représente des groupes alkyle possédant 1 à 6 atomes de carbone, de préférence un groupe méthyle,
R¹² représente un atome d'hydrogène ou un groupe alkyle possédant 1 à 6 atomes de carbone, de préférence un atome d'hydrogène ou un groupe méthyle,
R¹³ représente un groupe alkyle, aryle ou alkaryle possédant 1 à 30 atomes de carbone, qui contient éventuellement des fonctions éther,
R^{12'} représente un atome d'hydrogène ou un groupe alkyle possédant 1 à 6 atomes de carbone, de préférence un atome d'hydrogène ou un groupe méthyle,
k désigne un nombre de 0 à 4, de préférence de 1 à 2, en particulier 1,
R¹⁴ représente un groupe éthyle ou méthyle, de préférence un groupe méthyle,
R^{14'} représente un groupe éthyle ou méthyle, de préférence un groupe méthyle,
R¹⁵ représente éventuellement un groupe alkyle ramifié, saturé ou insaturé, possédant 1 à 30 atomes de carbone, qui contient éventuellement des fonctions éther ou hydroxyle, de préférence un groupe alkyle saturé linéaire possédant 8 à 22 atomes de carbone,
I désigne un nombre de 0 à 4, de préférence 1,
avec la condition que dans le cas de la formule VII ou dans le cas des amines tertiaires de la formule générale V ou VI (c'est-à-dire R¹² ou R^{12'} ≠ H) dans des quantités équimolaires par rapport à cette amine tertiaire, on ajoute un acide H⁺X⁻,
où
X- représente des contre-ions identiques ou différents par rapport aux charges positives des groupes d'ammonium quaternaire formés, choisis parmi les anions inorganiques ou organiques des acides HX, de préférence de l'acétate, du lactate, du sulfate d'éthyle, du sulfate de méthyle, du sulfonate de toluène, du bromure ou du chlorure,
à des siloxanes modifiés par des groupes d'amines tertiaires ou d'ammonium quaternaire, et ;
E) éventuellement, dans le cas où l'on utilise des amines secondaires à l'étape de procédé d2), c'est-à-dire R¹² ou R^{12'} = H,
transformation des groupes amines tertiaires résultants avec
[Y(CH₂)ₘCOO]_{1/n}Z formule générale VIII,
où
Y⁻ représente du sulfate d'éthyle, du sulfate de méthyle, du sulfonate de toluène, du bromure ou du chlorure,
Zⁿ⁺ représente des cations alcalins ou alcalino-terreux, de préférence Na⁺ ou K⁺, et
m désigne un nombre de 1 à 6, de préférence 1 ou 2, en particulier 1,
pour donner des groupes bétaïne.

2. Procédé selon la revendication 1, **caractérisé en ce que** l'on utilise au moins un solvant, en particulier du toluène, du cyclohexane et/ou de l'isopropanol.

3. Procédé selon la revendication 1 ou 2, **caractérisé en ce que** l'on utilise aux étapes de procédé A), B) et/ou éventuellement C) au moins un catalyseur à base de métal noble, en particulier un catalyseur contenant du Pt ou du Rh.

4. Procédé selon l'une au moins des revendications précédentes, **caractérisé en ce que**, à l'étape de procédé C), le composé alcényle/alcynyle est choisi dans le groupe constitué des polyéthers à liaisons multiples, des polyéthers à fonction allylique, des oléfines, de l'éthène, de l'éthyne, du propène, du 1-butène, du 1-hexène, du 1-dodécène, du 1-hexadécène, de l'alcool allylique, du 1-hexénol, du styrène, de l'eugénol et de l'allylphénol du méthylester de l'acide undécylénique, en particulier des polyéthers à fonction allylique.

5. Polysiloxane, contenant au moins un groupe bétaïne, pouvant être obtenu par un procédé selon l'une au moins des revendications précédentes.

6. Utilisation d'au moins un polysiloxane obtenu par un procédé selon l'une au moins des revendications 1 à 4 ou d'un polysiloxane selon la revendication 5 pour la production de compositions cosmétiques, pharmaceutiques ou dermatologiques.

7. Utilisation d'au moins un polysiloxane obtenu par un procédé selon l'une au moins des revendications 1 à 4 ou d'un polysiloxane selon la revendication 5 comme agent de soins dans des compositions de nettoyage et de soins.

8. Utilisation d'au moins un polysiloxane obtenu par un procédé selon l'une au moins des revendications 1 à 4 ou d'un polysiloxane selon la revendication 5 comme agent de conditionnement pour les compositions de traitement capillaire et des compositions de post-traitement capillaire et comme agent pour améliorer la structure capillaire.

9. Composition cosmétique, pharmaceutique ou dermatologique, de préférence composition cosmétique de soin et de nettoyage, en particulier composition aqueuse de soin et de nettoyage contenant un tensioactif, comprenant au moins un polysiloxane pouvant être obtenu par un procédé selon l'une au moins des revendications 1 à 4 ou au moins un polysiloxane selon la revendication 5.

10. Composition de soin et de nettoyage destinées à des applications domestiques, industrielles et institutionnelles, en particulier un agent assouplissant, comprenant au moins un polysiloxane pouvant être obtenu par un procédé selon l'une au moins des revendications 1 à 4 ou au moins un polysiloxane selon la revendication 5.
